(19) Europäisches Patentamt
European Patent Office
Office européen des brevets

(11) **EP 2 942 881 A1**

(12) **EUROPEAN PATENT APPLICATION**
published in accordance with Art. 153(4) EPC

(43) Date of publication:
**11.11.2015 Bulletin 2015/46**

(51) Int Cl.:
**H04B 7/24** (2006.01)

(21) Application number: **13817469.3**

(22) Date of filing: **11.07.2013**

(86) International application number:
**PCT/KR2013/006178**

(87) International publication number:
**WO 2014/010956 (16.01.2014 Gazette 2014/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.07.2012   KR 20120076912
27.07.2012   KR 20120082673**

(71) Applicant: **Electronics and Telecommunications
Research Institute
Daejeon-city 305-350 (KR)**

(72) Inventors:
• **KO, Young Jo
Daejeon 302-280 (KR)**
• **AHN, Jae Young
Daejeon 305-761 (KR)**
• **NOH, Tae Gyun
Daejeon 302-781 (KR)**
• **SEO, Bang Won
Daejeon 305-720 (KR)**

(74) Representative: **Betten & Resch
Patent- und Rechtsanwälte PartGmbB
Theatinerstraße 8
(Fünf Höfe)
80333 München (DE)**

(54) **DISCOVERY METHOD FOR DEVICE TO DEVICE COMMUNICATION BETWEEN TERMINALS**

(57)    A discovery method for device to device communication between terminals is disclosed. The discovery method for the device to device communication between terminals comprises the steps of: performing transmission in a first subframe; transmitting a discovery channel through a preset section in a second sub-frame located next to the first subframe; and performing transmission in a third sub-frame next to the second subframe. Therefore, the present invention can transmit and receive the discovery channel without colliding with other data.

[Figure 2]

**Description**

[Technical Field]

The present invention relates to discovery technology, and more specifically, to a discovery method of discovering a terminal in device to device communication.

[Background Art]

In a cellular communication environment, a general method by which terminals transmit and receive data is a method by which terminals transmit and receive data via a base station. In other words, when a first terminal has data to transmit to a second terminal, the first terminal transmits the data to a first base station that the first terminal belongs to. The first base station transmits the data received from the first terminal to a second base station that the second terminal belongs to. Finally, the second base station transmits the data received from the first base station to the second terminal. Here, the first base station and the second base station may be the same base stations or may be different base stations.

Meanwhile, device to device communication (D2D) means that terminals directly perform communication without via a base station. In other words, the first terminal can directly communicate with the second terminal without via the base station to transmit or receive data.

[Disclosure]

[Technical Problem]

An object of the present invention for solving the aforementioned problems is to provide a discovery method of determining a transmission and reception time point of a discovery channel.

Another object of the present invention for solving the aforementioned problems is to provide a discovery method of determining resources to be used for discovery channel transmission.

[Technical Solution]

A discovery method for device to device communication according to an embodiment of the present invention for achieving the above object includes performing transmission in a first subframe; transmitting a discovery channel through a previously set period in a second subframe located next to the first subframe; and performing transmission in a third subframe located next to the second subframe.

Here, the previously set period may be a period other than a first symbol and last one symbol in the second subframe.

Here, the previously set period may be a period other than a first symbol and last two symbols in the second subframe.

Here, the previously set period may be a period other than last one symbol in the second subframe.

Here, the previously set period may be a period from a first time point obtained by adding a reception start time of the second subframe of a partner terminal to a transmission/reception switching time to a second time point obtained by subtracting a round trip delay time and the transmission/reception switching time from a reception start time of the third subframe of the partner terminal.

Here, the previously set period may be a period from a first time point obtained by adding a reception start time of the second subframe of a partner terminal to a transmission/reception switching time to a second time point obtained by subtracting a round trip delay time, the transmission/reception switching time and a sounding reference signal transmission time from a reception start time of the third subframe of the partner terminal.

Here, the previously set period may be a period from a first time point which is a reception start time of the second subframe of a partner terminal to a second time point obtained by subtracting a round trip delay time from a reception start time of the third subframe of the partner terminal.

Here, the previously set period may be a period from a first time point which is a reception start time of the second subframe of a partner terminal to a second time point obtained by subtracting a round trip delay time and a sounding reference signal transmission time from a reception start time of the third subframe of the partner terminal.

Here, the previously set period may be a period set based on a discovery channel transmission time point received from a base station.

Here, a cyclic prefix of the second subframe may be set to a normal cyclic prefix or an extended cyclic prefix based on a size of a discovery channel range.

Here, the first subframe, the second subframe and the third subframe may be uplink subframes for cellular communication.

Here, the discovery channel may include a demodulation reference signal (DM RS) and a broadcasting channel.

Here, the second subframe may include resources for discovery and resources for cellular communication located in different frequency bands.

Here, the second subframe may further include a guard band which separates the resources for discovery and the resources for cellular communication on a frequency axis.

Here, in the second subframe, the resources for discovery adjacent on a frequency axis in any slot may be located to be spaced on the frequency axis in a slot next to the any slot.

Here, the discovery channel may be mapped on a time axis of the second subframe based on a Latin square matrix

Here, the discovery channel may be mapped on a frequency axis of the second subframe based on a Latin square matrix

A discovery method for device to device communication according to another embodiment of the present invention for achieving the above object includes receiving a first subframe; transmitting a discovery channel through a previously set period in a second subframe located next to the first subframe; and receiving a third subframe located next to the second subframe.

Here, the previously set period may be a symbol other than a symbol occupied by a control channel and a symbol used for transmission/reception switching in the second subframe.

Here, the first subframe, the second subframe and the third subframe may be downlink subframes for cellular communication.

[Advantageous Effects]

According to the present invention, the terminal transmitting the discovery channel can transmit the discovery channel through a period in which a collision with other subframes does not occur. The terminal receiving the discovery channel can receive the discovery channel which does not interfere with other signals.

[Description of Drawings]

FIG. 1 is a table illustrating a state of a terminal from the viewpoint of D2D discovery.

FIG. 2 is a conceptual diagram illustrating a relationship between transmission timings of an uplink subframe and a discovery channel in a terminal.

FIG. 3 is a conceptual diagram illustrating an embodiment of symbols available for discovery channel transmission in the case of a normal CP.

FIG. 4 is a conceptual diagram illustrating an embodiment of symbols available for discovery channel transmission in the case of an extended CP.

FIG. 5 is a conceptual diagram illustrating another embodiment of symbols available for discovery channel transmission in the case of a normal CP.

FIG. 6 is a conceptual diagram illustrating another embodiment of symbols available for discovery channel transmission in the case of an extended CP.

FIG. 7 is a conceptual diagram illustrating an embodiment of a temporal position of the discovery channel.

FIG. 8 is a conceptual diagram illustrating a cell arrangement and a terminal position.

FIG. 9 is a conceptual diagram illustrating another embodiment of a temporal position of the discovery channel.

FIG. 10 is a conceptual diagram illustrating a resource mapping structure of a D-RBG in a frequency-time resource space.

FIG. 11 is a conceptual diagram illustrating an SC-FDMA transmission structure.

FIG. 12 is a table illustrating an uplink subframe setting (FDD) for discovery channel transmission.

FIGS. 13a and 13b are conceptual diagrams illustrating an embodiment of subframe allocation in a discovery hopping process.

FIGS. 14a and 14b are conceptual diagrams illustrating an embodiment of discovery resource multiplexing and frequency domain hopping of a D-RBG.

FIG. 15 is a conceptual diagram illustrating a change in an index by grouping and shuffling.

FIG. 16 is a conceptual diagram illustrating an embodiment of grouping/shuffling and frequency hopping.

FIG. 17 is a table illustrating an example of a Q value according to an M value.

FIG. 18 is a table illustrating an SC-FDMA symbol number to be used for D-RBG data and DM RS transmission.

FIG. 19 is a conceptual diagram illustrating an embodiment of a Latin square matrix having a $4 \times 4$ size.

FIG. 20 is a conceptual diagram illustrating an embodiment of a time domain division for discovery channel mapping.

FIG. 21 is a table illustrating a Latin square matrix (q=0) with a 4x4 size.

FIG. 22 is a table illustrating a Latin square matrix (q=1) with a $4 \times 4$ size.

FIG. 23 is a table illustrating a Latin square matrix (q=2) with a $4 \times 4$ size.

FIG. 24 is a table illustrating the number of subframes necessary in the case of an extended CP.

FIG. 25 is a table illustrating the number of subframes necessary in the case of a normal CP.

FIG. 26 is a conceptual diagram illustrating a detection area of a discovery channel using the same discovery resource.

FIG. 27 is a conceptual diagram illustrating an example in which adjacent terminals use the same discovery channel.

FIG. 28 is a conceptual diagram illustrating an embodiment of a cell arrangement.

FIG. 29 is a table illustrating an example of allocation of a DM RS sequence to each cell.

FIG. 30 is a conceptual diagram illustrating an embodiment of discovery channel hopping and temporal collision.

FIG. 31 is a conceptual diagram illustrating an embodiment of use of a Latin square matrix-based No Tx hopping pattern.

FIG. 32 is a conceptual diagram illustrating an example of division and use of Latin square-based time axis No Tx hopping patterns among cells.

FIG. 33 is a conceptual diagram illustrating an example of division and use of Latin square-based time axis Tx hopping patterns among cells.

FIG. 34 is a conceptual diagram illustrating an example of different transmission start time points among cells and transmission after scan.

[Mode for Invention]

Various modifications may be made to the present invention, which can have several embodiments, and specific embodiments will be illustrated in the drawings and described in detail.

However, this is not intended to limit the present invention to the specific embodiments, and it should be understood that all modifications, equivalents, or substitutions included in the spirit and scope of the present invention are included.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises," "comprising,," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, preferred embodiments of the present invention will be described in greater detail with reference to the drawings. Like numbers refer to like elements throughout the description of the figures to facilitate general understanding in explaining the present invention, and a repeated description of the elements will be omitted.

Throughout this disclosure, a network may include wireless Internet such as wireless fidelity (WiFi), portable Internet such as wireless broadband Internet (WiBro) or world interoperability for microwave access (WiMax), a 2G mobile communication network such as a global system for mobile communication (GSM) or a code division multiple access (CDMA), a 3G mobile communication network such as wideband code division multiple access (WCDMA) or CDMA2000, a 3.5G mobile communication network such as high speed downlink packet access (HSDPA) or high speed uplink packet access (HSUPA), and a 4G mobile communication network such as an a long term evolution (LTE) network or a LTE-advanced network.

Throughout this disclosure, a terminal may refer to a mobile station, a mobile terminal, a subscriber station, a portable subscriber station, user equipment, or an access terminal, and may include all or some functions of the terminal, the mobile station, the mobile terminal, the subscriber station, the portable subscriber station, the user equipment, the access terminal or the like.

Here, a terminal may include a desktop computer, a laptop computer, a tablet PC, a wireless phone, a mobile phone, a smart phone, an e-book reader, a portable multimedia player (PMP), a portable gaming device, a navigation device, a digital camera, a digital multimedia broadcasting (DMB) player, a digital audio recorder, a digital audio player, a digital picture recorder, a digital picture player, a digital video recorder, or a digital video player, which has a communication function.

Throughout this disclosure, a base station may refer to an access point, a radio access station, a node B, an evolved NodeB, a base transceiver station, a mobile multihop relay (MMR)-BS or the like and may include all or some functions of the base station, the access point, the radio access station, the node B, the eNodeB, the base transceiver station, the MMR-BS or the like.

Device to device (D2D) discovery refers to a process in which geographically adjacent terminals discover each other's existence and acquire service content provided by the discovered terminal through direct transmission or reception between the terminals. For this, some or all of terminals participating in D2D discovery may broadcast information including a terminal ID and/or a service ID through a physical channel. Here, the physical channel used for D2D discovery is referred to as a discovery channel.

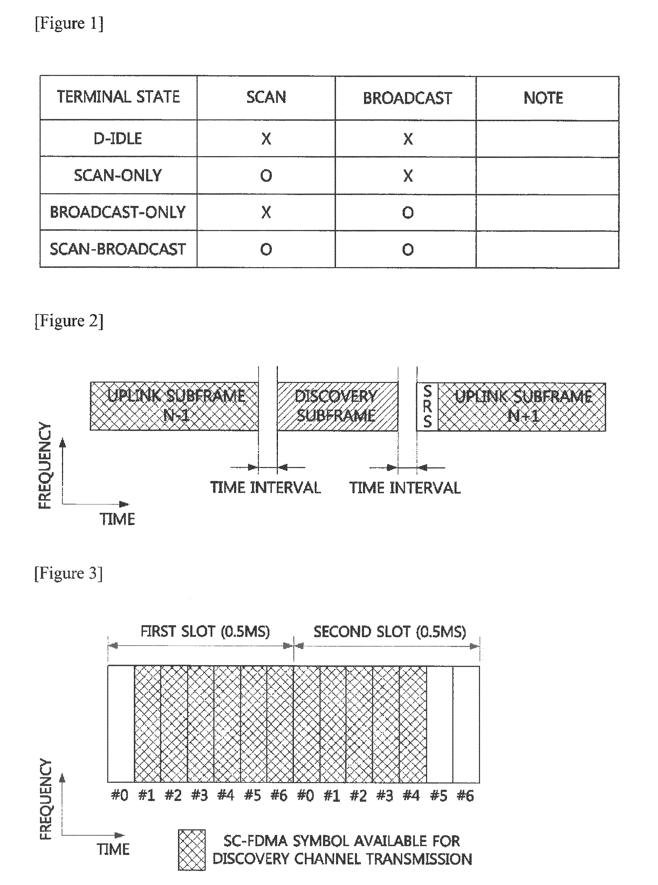

FIG. 1 is a table illustrating a state of a terminal from the viewpoint of D2D discovery.

Referring to FIG. 1, a terminal in D-IDLE state does not participate in D2D discovery. In other words, the terminal neither performs search and decoding for a discovery channel of another terminal nor transmit its own discovery channel. A terminal in scan-only state periodically performs search and decoding of a discovery channel for another terminal, but does not transmit its own discovery channel. A terminal in broadcast-only state periodically transmits its own discovery channel, but does not perform search and decoding for the discovery channel of another terminal. A terminal in scan-broadcast state not only periodically performs search and decoding for a discovery channel of another terminal, but also periodically transmits its own discovery channel.

Uplink resources may be used for D2D discovery communication. In the case of an FDD (frequency division duplex) cellular system, a terminal may use a downlink frequency band and an uplink frequency band for cellular communication and may use an uplink frequency band for D2D discovery communication. The terminal may use both the downlink frequency band and the uplink frequency band for exchange of control information for D2D discovery communication.

In the case of a TDD (time division duplex) cellular system, a terminal may use a downlink subframe and an uplink subframe for cellular communication and may use the uplink subframe for D2D discovery communication. The terminal may use both the downlink subframe and the uplink subframe for exchange of control information for D2D discovery.

From the viewpoint of one terminal, it may be desirable for cellular uplink transmission and D2D discovery channel transmission and reception not to occur at the same time.

For resources allocated for D2D discovery transmission and reception, the same time-frequency resource may be used between cells. For this, subframe transmission timings between the cells should match. When the same time-frequency resource is used, the terminal may easily receive the discovery channel transmitted by other terminals belonging to neighboring cells, and interference caused by overlapping of resources for cellular communication and resources used by the discovery channel between cells can be avoided.

Hereinafter, a scheme of allocating transmission and reception resources to be used for D2D discovery, and a method of determining a discovery channel transmission timing will be described in detail.

**Scheme 1 - uplink transmission timing base and uplink** subframe use

A terminal may transmit a discovery channel using an uplink subframe. A discovery channel transmission timing may be determined based on an uplink transmission timing of each terminal. For this, the terminal transmitting the discovery channel should maintain uplink synchronization.

In this scheme, since discovery channel transmission is performed in uplink synchronization, orthogonality of cellular resources and discovery resources is maintained, but power consumption due to sounding reference signal (SRS) transmission and timing advance (TA) reception of a terminal for maintaining the uplink synchronization, and increase in overhead due to use of SRS resources may occur. However, in the case of a fixed terminal, the TA is necessary only in initial connection, and most terminals participating in discovery need not frequently perform the SRS transmission and the TA reception since the terminals are low-mobility terminals. Therefore, the power consumption and the overhead are not severe problems.

The terminal should switch transmission-to-reception (Tx-to-Rx) of an RF device in order to receive the discovery channel through a next subframe immediately after having transmitted a subframe. Further, the terminal should switch reception-to-transmission (Rx-to-Tx) of the RF device in order to transmit a next subframe immediately after having received the discovery channel. Thus, transmission-to-reception (Tx-to-Rx) switching or reception-to-transmission (Rx-to-Tx) switching takes a certain switching time.

FIG. 2 is a conceptual diagram illustrating a relationship between transmission timings of an uplink subframe and a discovery channel in a terminal.

Referring to FIG. 2, a relationship between the uplink subframe transmission timing and the discovery channel transmission timing in the terminal when a transmission/reception (TX/RX) switching time is secured is shown. Here, a discovery subframe refers to an uplink subframe used for a terminal to transmit the discovery channel.

In order to secure the transmission/reception (Tx/Rx) switching time, a first SC-FDMA (single carrier frequency division multiple access) symbol of the discovery subframe on a border between a normal subframe and the discovery subframe may not be used for discovery channel transmission.

When the discovery subframe does not correspond to a cell-specif SRS subframe in which SRS transmission occurs, a last SC-FDMA symbol of the discovery subframe may be used to secure a transmission/reception (Tx/Rx) switching time. In other words, when a subframe for cellular communication is generated just after the discovery subframe, the last SC-FDMA symbol of the discovery subframe may not be used for discovery channel transmission. Therefore, symbols other than the first SC-FDMA symbol and the last SC-FDMA symbol in the discovery subframe may be used for discovery channel transmission.

When the discovery subframe corresponds to a cell-specific SRS subframe in which the SRS transmission occurs (i.e., when a last symbol of the discovery subframe is an SRS transmission symbol), a SC-FDMA symbol immediately before the last SC-FDMA symbol of the discovery subframe may be used to secure the transmission/reception (Tx/Rx) switching time. In this case, the last two SC-FDMA symbols of the discovery subframe may not be used for discovery channel transmission. Therefore, symbols other than the first SC-FDMA symbol and the last two SC-FDMA symbols in the discovery subframe may be used for discovery channel transmission.

If realistic difficulty of cooperation and harmony between cells (particularly, when the cells are managed by different base stations) is considered, it is desirable to design frames in consideration of a possibility of generating an SRS transmission symbol in the discovery subframe. Therefore, an area that may be used for discovery channel transmission in the discovery subframe may be set to a time period other than the first SC-FDMA symbol and the last two SC-FDMA symbols.

FIG. 3 is a conceptual diagram illustrating an embodiment of symbols available for discovery channel transmission in the case of a normal CP.

Referring to FIG 3, when a normal cyclic prefix (CP) is used, a terminal may transmit the discovery channel using a time period other than a first SC-FDMA symbol and last two SC-FDMA symbols in the discovery subframe.

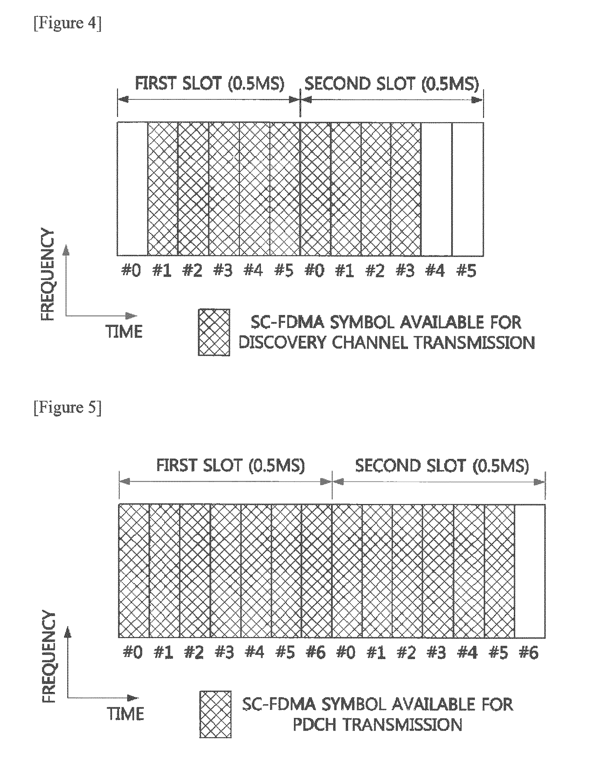

FIG. 4 is a conceptual diagram illustrating an embodiment of symbols available for discovery channel transmission in the case of an extended CP.

Referring to FIG. 4, when the extended cyclic prefix (CP) is used, the terminal may transmit the discovery channel using a time period other than a first SC-FDMA symbol and last two SC-FDMA symbols in the discovery subframe.

The scheme in which some of the SC-FDMA symbols in the discovery subframe are not used to secure the transmission/reception (Tx/Rx) switching time has been described above. However, when only uplink cellular communication is likely to occur in a subframe immediately before or after the discovery subframe, the terminal performs uplink transmission or transmits nothing in the subframe. Therefore, from the viewpoint of the terminal transmitting the discovery channel, it is unnecessary to secure the transmission/reception (Tx/Rx) switching time in the discovery subframe. If a state enters a reception state for D2D communication in the subframe immediately before and after the discovery subframe, the transmission/reception (Tx/Rx) switching time can be secured in the subframe before and after the discovery subframe. Therefore, in this case, it is also unnecessary to secure the transmission/reception (Tx/Rx) switching time in the discovery subframe from the viewpoint of the terminal transmitting the discovery channel.

Even when it is unnecessary to secure the transmission/reception (Tx/Rx) switching time, if the realistic difficulty of cooperation and harmony between the cells is considered (particularly, when the cells are managed by different base stations), it is preferable to design the frame in consideration of the possibility of the discovery subframe being a cell-specific SRS subframe. In other words, if a case in which the discovery subframe corresponds to a cell-specific SRS subframe is considered, the last SC-FDMA symbol of the discovery subframe may not be used for discovery channel transmission. In other words, the last SC-FDMA symbol of the discovery subframe may be excluded from discovery channel resource element mapping. Therefore, the discovery channel may be transmitted using symbols other than the last SC-FDMA symbol in the discovery subframe.

FIG. 5 is a conceptual diagram illustrating another embodiment of symbols available for discovery channel transmission in the case of a normal CP.

Referring to FIG. 5, when a normal CP is used, a terminal may transmit the discovery channel using a time period other than the last SC-FDMA symbol in the discovery subframe.

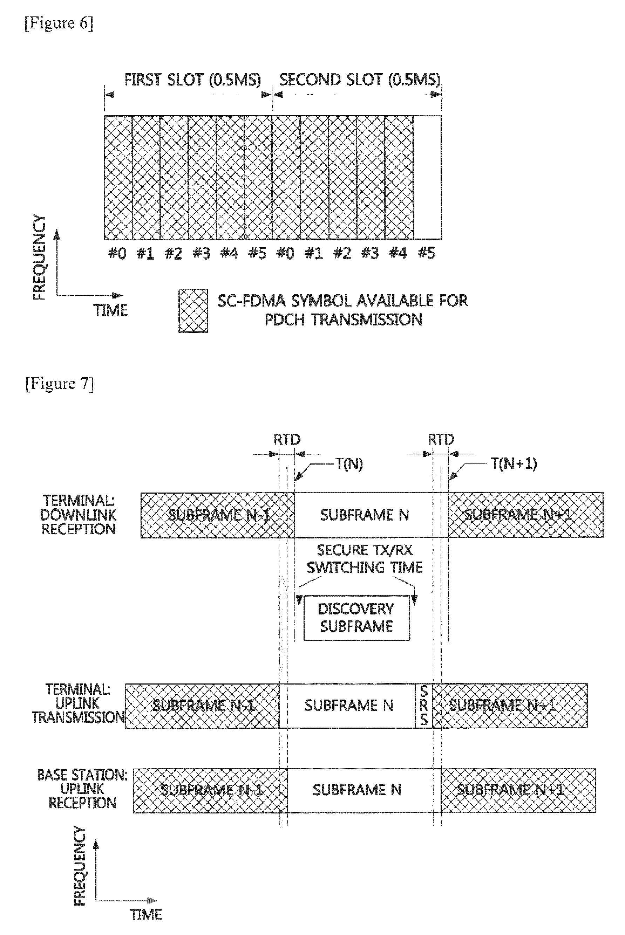

FIG. 6 is a conceptual diagram illustrating another embodiment of symbols available for discovery channel transmission in the case of an extended CP.

Referring to FIG. 6, when an extended CP is used, a terminal may transmit the discovery channel using a time period other than last one SC-FDMA symbol in the discovery subframe.

The CP of the discovery subframe may be configured to be different from a CP of a cellular uplink in consideration of a size of a discovery area, a size of the cell, a channel environment or the like. The base station may provide the terminal with a system information block (SIB) including information indicating whether a CP used by the discovery subframe is a normal CP or an extended CP.

If the SC-FDMA symbols used for the discovery channel are as shown in FIG. 5 or 6, the transmission-to-reception (Tx-to-Rx) switching of the RF device is necessary when the terminal receives the discovery channel in a next subframe immediately after having transmitted a subframe. Further, the reception-to-transmission (Rx-to-Tx) switching is necessary when the terminal transmit a subframe after having received the discovery channel. When a certain switching time is necessary for transmission-to-reception (Tx-to-Rx) switching or reception-to-transmission (Rx-to-Tx) switching, the terminal may not receive one SC-FDMA symbol in order to secure the switching time, and may receive remaining symbols and perform decoding.

### Scheme 2 -downlink reception timing base and uplink subframe use

A terminal may transmit the discovery channel using an uplink subframe. A discovery channel transmission timing may be set based on the downlink reception timing of the terminal. Since the terminal can acquire the downlink reception timing regardless of the terminal state, the terminal transmitting the discovery channel may be in RRC_IDLE or RRC_CONNECTED state. Further, a terminal in RRC_CONNECTED state as well as a terminal in RRC_IDLE state can receive discovery channels.

As described above, the transmission-to-reception (Tx-to-Rx) switching of the RF device is necessary for the terminal to receive a discovery channel in a next subframe after having performed transmission. Further, the reception-to-transmission (Rx-to-Tx) switching is necessary for the terminal to perform transmission in a next subframe after having received a discovery channel.

FIG. 7 is a conceptual diagram illustrating an embodiment of a temporal position of the discovery channel.

Referring to FIG. 7, a discovery channel transmission start time point of the terminal should be after T1 in order to secure the transmission/reception (Tx/Rx) switching time in the discovery subframe. T1 may be calculated using Equation 1 below.

[Equation 1]

$$T1 = T(n) + \text{Tx/Rx switching time}$$

Here, T(n) denotes a reception start time point of a downlink subframe n at the terminal.

When the terminal is located near a transmission point by which the terminal is served, signal RTD (round-trip delay) between the terminal and the base station is almost 0. Accordingly, a transmission time point of the uplink subframe n of the terminal almost matches a transmission time point of the downlink subframe n of the base station. When the terminal performs the uplink transmission in the subframe n-1, transmission-to-reception (Tx-to-Rx) switching is necessary to receive a discovery channel through a next subframe. Therefore, a discovery channel to be transmitted by another terminal should be after T1, which is obtained by adding the transmission-to-reception (Tx-to-Rx) switching time to a start time point of the subframe n. A terminal far from the serving transmission point has a temporal margin corresponding to its own RTD whereas a terminal near the base station has no temporal margin. In consideration of this, the terminal may transmit the discovery channel after T1, which is obtained by adding the transmission/reception (Tx/Rx) switching time to its own T(n).

Here, the same value of the transmission/reception (Tx/Rx) switching time may be applied to all terminals. T1 may be different from terminal to terminal according to the downlink reception time point T(n) of each terminal. It can be seen that, if a line of sight (LOS) signal component is considered, T1 of the terminal near the transmission point is smaller than T1 of the terminal apart from the transmission point. When a radius of the cell is R, a maximum difference in T1 between terminals belonging to the same cell is approximately R/C (C denotes an electromagnetic wave propagation speed, which is $3 \times 10^8$ m/s).

Next, when the reception start time point of the downlink subframe n+1 in the terminal is T(n+1), a discovery channel transmission end time point of the terminal should not exceed T2, which is calculated using Equation 2 below.

[Equation 2]

$$T2 = T(n+1) - \text{Max RTD} - \text{Tx/Rx switching time}$$

Here, Max RTD denotes an RTD between the terminal located farthest from the transmission point and the transmission point. The RTD is maximum in the case of the terminal farthest from the transmission point, and there is a difference of RTD between the downlink subframe reception time point and the uplink transmission time point at the terminal, as shown in FIG. 7. Accordingly, when the terminal receiving the discovery channel in the subframe n performs transmission in the uplink subframe n+1. the terminal should complete reception-to-transmission (Rx-to-Tx) switching after receiving the discovery channel in the uplink subframe n. Since the end time point of the uplink subframe n of the terminal is given as T(n+1)-RTD, the reception of the discovery channel should be completed until T2 in consideration of the transmission/reception (Tx/Rx) switching time. Therefore, the terminal transmitting the discovery channel may be set to complete the discovery channel transmission at the time point T2.

The last symbols of specific uplink subframes may be used for SRS transmission, and subframes in which the SRS transmission occurs may be differently allocated from cell to cell. Accordingly, when there is no signaling of the base station, the terminal cannot know subframes used for SRS transmission in other cells which the terminal does not belong to. In consideration of this, when the discovery channel transmission does not occur in the SRS subframe (i.e., when the discovery subframe is allocated while avoiding all SRS subframes), T2 may be set as shown in Equation 2.

However, when the discovery channel transmission is likely to occur in a SRS subframe, T2 may be set as shown in Equation 3 in order to avoid a collision between the discovery channel transmission and the SRS symbol transmission.

[Equation 3]

$$T2 = T(n+1) - Max\ RTD - Tx/Rx\ switching\ time - SRS\ symbol\ time$$

Based on the above description, when the discovery channel transmission does not occur in a SRS subframe (i.e., when the discovery subframe is allocated while avoiding all SRS subframes), a maximum duration time (Td) of the discovery subframe is as shown in Equation 4 below. When a collision with the SRS transmission is avoided by not using the last SC-FDMA symbol in consideration of the possibility of allocating the discovery subframe in the SRS subframe, the maximum duration time (Td) of the discovery subframe is as shown in Equation 5 below.

[Equation 4]

$$Td = T2 - T1 = 1ms - 2 \times (Tx/Rx\ switching\ time) - Max\ RTD$$

[Equation 5]

$$Td = T2 - T1 = 1ms - 2 \times (Tx/Rx\ switching\ time) - Max\ RTD - SRS\ symbol\ time$$

Assuming a CP length and an SC-FDMA symbol length used in 3GPP LTE, the number of SC-FDMA symbols available for the discovery subframe can be estimated as follows.

If the transmission/reception (Tx/Rx) switching time is about 20 us and Max RTD is about 7 us, and a collision with a SRS transmission is avoided in consideration of the possibility of allocating the discovery subframe in a SRS subframe, a maximum of twelve SC-FDMA symbols may be used for discovery channel transmission when a normal CP is used for discovery channel transmission and a maximum of ten SC-FDMA symbols may be used for discovery channel transmission when an extended CP is used.

The number of SC-FDMA symbols available for the discovery subframe is determined based on $[2 \times (Tx/Rx$ switching time)+Max RTD] and whether the SRS symbol time is allowed or not. Max RTD depends on the size of the cell as described above. If calculation is performed based on the line of sight (LOS) signal component, Max RTD is about 3.3 us when a distance from a cell center to a cell edge is 500 m, 6.7us when the distance is 1 km, 66.7us when the distance is 10 km, and 666.7us when the distance is 100 km.

If the last symbol is not used in consideration of a possibility of the SRS transmission in the discovery subframe and if the normal CP is used for the discovery subframe, thirteen SC-FDMA symbols may be used for discovery channel transmission when [transmission/reception (Tx/Rx) switching time+Max RTD] is smaller than the normal CP length (4.69 us), and twelve SC-FDMA symbols may be used for discovery channel transmission when $[2 \times [(Tx/Rx$ switching time)+Max RTD] is greater than the normal CP length but smaller than the SC-FDMA symbol length (about 71 us). If the extended CP is used for the discovery subframe, eleven SC-FDMA symbols may be used for discovery channel transmission when $[2 \times (Tx/Rx$ switching time)+Max RTD] is smaller than the extended CP length (16.6 us), and ten SC-FDMA symbols may be used for discovery channel transmission when $[2 \times (Tx/Rx$ switching time)+Max RTD] is greater than the extended CP length but smaller than the SC-FDMA symbol length (about 83 us).

If the discovery subframe is not allocated in a SRS subframe (when the discovery subframe is allocated while avoiding all the SRS subframes) and if the normal CP is used for the discovery subframe, fourteen SC-FDMA symbols may be used for discovery channel transmission when $[2 \times (Tx/Rx$ switching time)+Max RTD] is smaller than the normal CP length (4.69 us), and thirteen SC-FDMA symbols may be used for discovery channel transmission when $[2 \times (Tx/Rx$ switching time)+Max RTD] is greater than the normal CP length but smaller than the SC-FDMA symbol length (about 71 us). If the extended CP is used for the discovery subframe, twelve SC-FDMA symbols may be used for discovery channel transmission when $[2 \times (Tx/Rx$ switching time)+Max RTD] is smaller than the extended CP length (16.6 us), and eleven SC-FDMA symbols may be used for discovery channel transmission when $[2 \times (Tx/Rx$ switching time)+Max RTD] is greater than the extended CP length but smaller than the SC-FDMA symbol length (about 83 us).

The CP should be designed in consideration of a discovery range. The discovery channel received by the terminal may be delayed relative to the downlink reception timing of the terminal. When the receiving terminal is located near the transmission point and the transmitting terminal served by the same transmission point is relatively apart from the transmission point, a maximum delay may occur.

When the discovery channel range is about 1km, the discovery channel to be received by the terminal can be delayed by a maximum of about 7 us (corresponding to RTD of about 2 km) from the reception start time point of the terminal. Therefore, in this case, the extended CP (about 16 us) may be used.

On the other hand, when the discovery channel range is about 500m, the discovery channel to be received by the terminal may be delayed by a maximum of about 3.4 us (corresponding to RTD of about 1 km) from the reception start time point of the terminal. Therefore, in this case, the normal CP (about 4.7 us) may be used.

The base station configures whether the CP to be used by the discovery subframes is the normal CP or the extended CP and may inform the terminal of this.

When temporally consecutive N subframes are allocated as discovery subframes, Max RTD has only to be considered in only an $N^{th}$ subframe which is a last subframe among the consecutive N subframes. In other words, in the $N^{th}$ subframe, the Max RTD value is determined in consideration of the size of the cell in Equations 2 and 3 representing T2 and Equations 4 and 5 representing the maximum duration time (Td) of the discovery subframe. On the other hand, for each of (N-1) subframes other than the $N^{th}$ subframe, the Max RTD value does not have to be considered in Equations 2, 3, 4 and 5, and accordingly Max RTD should be regarded as 0.

Accordingly, for each of the (N-1) subframes other than the $N^{th}$ subframe, the number of SC-FDMA symbols available for the discovery channel is determined as follows. If the last SC-FDMA symbol is not used for discovery channel transmission in consideration of the possibility of allocating the discovery subframe in a SRS subframe, when the normal CP is used for the subframe with one SC-FDMA symbol to be used for Tx/Rx switching additionally excluded, twelve SC-FDMA symbols may be used for discovery channel transmission and when the extended CP is used with one SC-FDMA symbol to be used for Tx/Rx switching additionally excluded, ten SC-FDMA symbols may be used for discovery channel transmission. If the discovery subframe is not allocated in a SRS subframe (when the discovery subframe is allocated while avoiding all the SRS subframes), when the normal CP is used for the subframe, thirteen SC-FDMA symbols except for one SC-FDMA symbol to be used for Tx/Rx switching may be used for discovery channel transmission, and when the extended CP is used, eleven SC-FDMA symbols except for one SC-FDMA symbol to be used for Tx/Rx switching may be used for the discovery channel transmission.

In the case of the $N^{th}$ subframe, if the last symbol is not used in consideration of the possibility of the SRS transmission in the discovery subframe, 13 or less SC-FDMA symbols may be used according to a size of [2×(Tx/Rx switching time)+Max RTD] as described above, and when the discovery subframe is not allocated in a SRS subframe (the discovery subframe is allocated while avoiding all the SRS subframes), 14 or less SC-FDMA symbols may be used according to a size of [2×[(Tx/Rx switching time+Max RTD]]. When Max RTD is deemed to be about 20 us and the last symbol is not used in consideration of the possibility of the SRS transmission in the discovery subframe, 12 or less SC-FDMA symbols may be used, and when the discovery subframe is allocated while avoiding all the SRS subframes, 13 or less SC-FDMA symbols may be used.

The base station may configure the number of SC-FDMA symbols to be used in the $N^{th}$ subframe (the last discovery subframe in allocation of the temporally consecutive subframes) and inform the terminal of the number.

The scheme in which the SC-FDMA symbol of the discovery subframe is not used to secure the Tx/Rx switching time has been described above. However, when only the uplink cellular communication occurs in a subframe immediately before or after the discovery subframe, the terminal performs or does not perform the uplink transmission in the subframe. Therefore, it is unnecessary for the terminal transmitting the discovery channel to secure the transmission/reception (Tx/Rx) switching time in the discovery subframe.

Even when the terminal operates in a reception state for D2D communication in the subframe immediately before and after the discovery subframe, the terminal may secure the transmission/reception (Tx/Rx) switching time in the subframe before or after the discovery subframe. Therefore, it is unnecessary for the terminal transmitting the discovery channel to secure the transmission/reception (Tx/Rx) switching time within the discovery subframe. Therefore, in this case, T1 may be set as shown in Equation 6 below and T2 may be set as shown in Equation 7 below.

[Equation 6]

$$T1 = T(n)$$

[Equation 7]

$$T2 = T(n+1) - Max\ RTD$$

However, when possibility of allocating the discovery subframe in a SRS subframe is considered, T2 may be set as shown in Equation 8 below in order to prevent a collision with the SRS transmission.

[Equation 8]

$$T2 = T(n+1) - Max\ RTD - SRS\ symbol\ time$$

When the discovery subframe is not allocated in a SRS subframe (when the discovery subframe is allocated while avoiding all the SRS subframes), a maximum duration time (Td) of the discovery subframe may be set as shown in Equation 9 below.

[Equation 9]

$$Td = T2 - T1 = 1ms - Max\ RTD$$

When a possibility of allocating the discovery subframe in a SRS subframe is considered, the maximum duration time (Td) of the discovery subframe may be set as shown in Equation 10 below in order to prevent the collision with the SRS transmission.

[Equation 10]

$$Td = T2 - T1 = 1ms - Max\ RTD - SRS\ symbol\ time$$

If the last symbol is not used in consideration of a possibility of the SRS transmission in the discovery subframe and the normal CP is used for the discovery subframe, thirteen SC-FDMA symbols may be used for discovery channel transmission when Max RTD is smaller than the normal CP length (4.69 us) and twelve SC-FDMA symbols may be used for discovery channel transmission when Max RTD is greater than the normal CP length but smaller than the SC-FDMA symbol length (which is about 71 us). If the extended CP is used for the discovery subframe, eleven SC-FDMA symbols may be used for discovery channel transmission when Max RTD is smaller than the extended CP length (16.6 us), and ten SC-FDMA symbols may be used for discovery channel transmission when Max RTD is greater than the extended CP length but smaller than the SC-FDMA symbol length (which is about 83 us).
If the discovery subframe is not allocated in a SRS subframe (if the discovery subframe is allocated while avoiding all the SRS subframes) and the normal CP is used for the discovery subframe, fourteen SC-FDMA symbols may be used for discovery channel transmission if Max RTD is smaller than the normal CP length (4.69 us), and thirteen SC-FDMA symbols may be used for discovery channel transmission if Max RTD is greater than the normal CP length but smaller than the SC-FDMA symbol length (which is about 71 us). When the extended CP is used for the discovery subframe, twelve SC-FDMA symbols may be used for discovery channel transmission if Max RTD is smaller than the extended CP length (16.6 us), and eleven SC-FDMA symbols may be used for discovery channel transmission if Max RTD is greater than the extended CP length but smaller than the SC-FDMA symbol length (which is about 83 us).
When temporally consecutive N subframes are allocated as discovery subframes, Max RTD has only to be considered only in the $N^{th}$ subframe which is a last subframe among the consecutive N subframes. In other words, in the $N^{th}$ subframe, a Max RTD value is determined in consideration of the size of the cell in Equations 7 and 8 representing T2 and Equations 9 and 10 representing the maximum duration time (Td) of the discovery subframe. On the other hand, for each of (N-1) subframes other than the $N^{th}$ subframe, the Max RTD value does not have to be considered in Equations 7, 8, 9 and 10 and accordingly Max RTD should be regarded as 0.
Accordingly, if the last SC-FDMA symbol is not used for discovery channel transmission in consideration of a possibility of allocating the discovery subframe in a SRS subframe for each of the (N-1) subframes other than the $N^{th}$ subframe, thirteen SC-FDMA symbols may be used for discovery channel transmission when the normal CP is used for the subframe, and eleven SC-FDMA symbols may be used for discovery channel transmission when the extended CP is used. If the discovery subframe is not allocated in a SRS subframe (if the discovery subframe is allocated while avoiding all the SRS subframes), fourteen SC-FDMA symbols may be used for discovery channel transmission when the normal CP is used for the subframe and twelve SC-FDMA symbols may be used for discovery channel transmission if the extended CP is used.

In the case of the $N^{th}$ subframe, if the last symbol is not used in consideration of the possibility of the SRS transmission in the discovery subframe, 13 or less SC-FDMA symbols may be used according to a size of Max RTD as described above, and if the discovery subframe is not allocated in a SRS subframes (when the discovery subframe is allocated while avoiding all the SRS subframes), 14 or less SC-FDMA symbols may be used according to a size of Max RTD as described above.

The base station may configure the number of SC-FDMA symbols to be used in the $N^{th}$ subframe (the last discovery subframe in allocation of the temporally consecutive subframes) and may inform the terminal of the number.

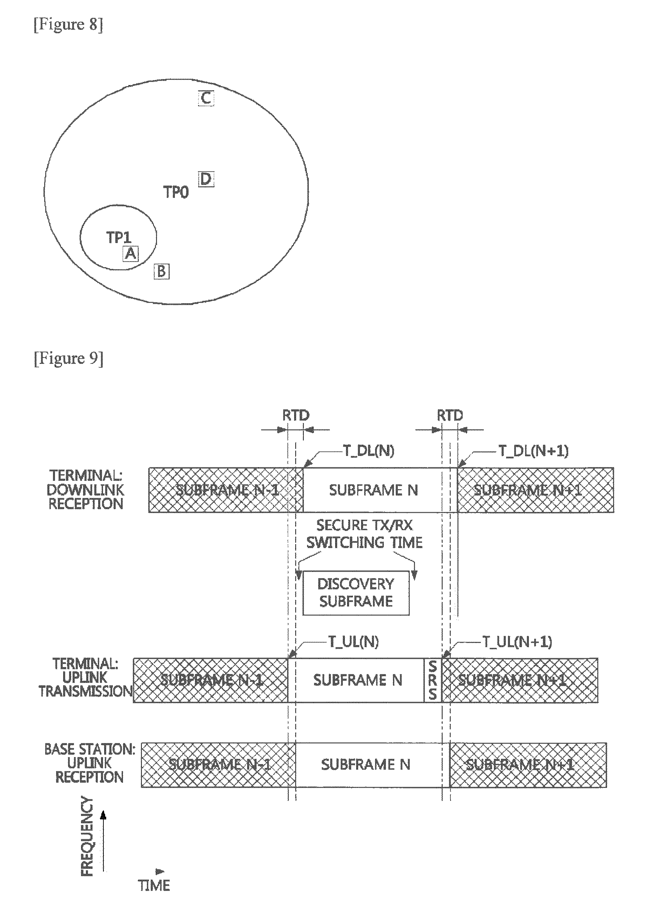

Hereinafter, it is assumed in FIG. 8 that a small cell formed by a transmission point TP1 is located in a large cell formed by a transmission point TP0, a terminal A is served by the transmission point TP1, and terminals B, C, and D are served by the transmission point TP0. It is necessary for a downlink subframe transmission timing of the small cell transmission point TP1 to be set to be delayed by a propagation delay between the large cell transmission point TP0 and the small cell transmission point TP1 from a downlink subframe transmission timing of large cell transmission point TP0 in order to prevent the terminals from having ambiguity of D2D discovery channel transmission and reception timing between the terminals. In other words, when a propagation delay between the large cell transmission point TP0 and the small cell transmission point TP1 is indicated by $T_{prop}$, a downlink subframe transmission start time of the large cell transmission point TP0 is indicated by $T_{TP0}$, and a downlink subframe transmission start time of the small cell transmission point TP1 is indicated by $T_{TP1}$, $T_{TP1}=T_{TP0}+T_{prop}$.

By doing so, the downlink reception timings from the two transmission points match or substantially match from the viewpoint of the terminals. Accordingly, a terminal A and a terminal B of FIG. 8 are served by different transmission points, but discovery channel transmission and reception timings between adjacent terminals match or very similar such that the reception at the terminal is advantageously simplified. Particularly, when a large cell is very large and a small cell is located around the large cell, and a downlink subframe transmission timing of a large cell transmission point TP0 and a downlink subframe transmission timing of a small cell transmission point TP1 are set to match, i.e., $T_{TP1}=T_{TP0}$, a differences in discovery transmission and reception timing between the terminal A and the terminal B exceeds the CP length. Accordingly, reception quality of the terminal may be degraded or reception complexity of the terminal may increase for reliable reception.

Further, it is to be noted that the number of SC-FDMA symbols used for the discovery channel should be the same regardless of the cells serving the terminals in a deployment of a large cell and a small cell as illustrated in FIG. 8, and for this, the Max RTD value should be determined based on a size of the large cell and a channel environment. The same applies to scheme 4, which will be described below.

## Scheme 3 -downlink reception timing base and downlink subframe use

In scheme 3, the terminal may transmit the discovery channel using a downlink subframe. A discovery channel transmission timing may be determined based on a downlink reception timing of the terminal. The terminal transmitting the discovery channel may operate in RRC_IDLE or RRC_CONNECTED state. Further, a terminal in RRC_CONNECTED state as well as a terminal in RRC_IDLE state can receive the discovery channel.

The terminal should secure a reception-to-transmission (Rx-to-Tx) switching time in order to transmit the discovery channel after receiving the downlink, and should secure a transmission-to-reception (Tx-to-Rx) switching time in order to receive the downlink after transmitting the discovery channel. The reception-to-transmission (Rx-to-Tx) switching time may be secured within the discovery subframe for the terminal transmitting the discovery channel.

In an LTE downlink subframe, a control channel may be located at the head of the subframe and occupy a maximum of three or four OFDM symbols according to a downlink transmission bandwidth.

Accordingly, OFDM symbols used by the discovery channel may be selected from among symbols other than a maximum of OFDM symbols occupied by the control channel. Further, first and last OFDM symbols in the subframe may not be used for transmission in order to secure the transmission/reception (Tx/Rx) switching time.

When the maximum number of OFDM symbols which can be occupied by the control channel in the subframe is $l_{control}$, symbol numbers of the OFDM symbols used for discovery channel transmission, other than OFDM symbol numbers 0, 1, ..., ($l_{control}-1$) and also first and last OFDM symbols to secure the transmission/reception (Tx/Rx) switching time, are "$l_{control}$, $l_{control}+1$,..., $l_{last}-1$."

Here, when the normal CP is used for discovery channel transmission, the last OFDM symbol number $l_{last}$ of the subframe is 13, and when the extended CP is used for discovery channel transmission, the last OFDM symbol number $l_{last}$ of the subframe is 11.

## Scheme 4 -same transmission time point use and uplink subframe use

In scheme 4, a terminal may transmit a discovery channel using an uplink subframe. The base station may provide information for a discovery channel transmission time point to the terminal, and the terminal may transmit the discovery channel according to the discovery channel transmission time point received from the base station. The terminal transmitting the discovery channel may directly receive a TA command for discovery channel transmission from the base station. For this, the terminal should maintain RRC-CONNECTED state, and the terminal should periodically transmit SRS such that the base station can acquire timing information of the terminal. The terminal may receive a separate TA command for discovery channel transmission from the base station. In this scheme, the discovery TA may match all discovery channel transmission time points of terminals to be (substantially) the same time point.

FIG. 9 is a conceptual diagram illustrating another embodiment of a temporal position of the discovery channel.

Referring to FIG. 9, a discovery channel transmission start time point may mean a time point corresponding to a half of a downlink subframe reception time point plus an uplink subframe transmission time point of the terminal. When the discovery channel is transmitted in an uplink subframe n, a transmission start time point of the uplink subframe n in the terminal may be represented by $T\_UL(n)$, and a reception start time point of the downlink subframe n in a partner terminal may be represented by $T\_DL(n)$. When the transmission/reception (Tx/Rx) switching time is secured in the discovery subframe, the discovery channel transmission start time point T1 of the terminal may be calculated using Equation 11 below.

[Equation 11]

$$T1 = [T\_DL(n) + T\_UL(n)]/2 + Tx/Rx\ \text{switching time}$$

Next, when the transmission start time point of an uplink subframe n+1 in the terminal is indicated by $T\_UL(n+1)$ and the reception start time point of the downlink subframe n+1 in the partner terminal is indicated by $T\_DL(n+1)$, the discovery signal transmission end time point of the terminal may be set not to exceed T2. When the transmission/reception (Tx/Rx) switching time is secured in the discovery subframe, T2 may be calculated using Equation 12 below.

[Equation 12]

$$T2 = [T\_DL(n+1) + T\_UL(n+1)]/2 - Max\ RTD/2 - Tx/Rx\ \text{switching time} - SRS\ \text{symbol time}$$

$$\text{or}\ T2 = [T\_DL(n+1) + T\_UL(n+1)]/2 - Max\ RTD/2 - Tx/Rx\ \text{switching time}$$

When the discovery subframe is not allocated in a SRS subframe (when discovery subframe is allocated while avoiding all the SRS subframes), a maximum duration time (Td) of the discovery channel may be calculated using Equation 13 below.

[Equation 13]

$$Td = T2 - T1 = 1\ ms - 2 \times (Tx/Rx\ \text{switching time}) - Max\ RTD/2$$

If a possibility of allocating the discovery subframe in a SRS subframe is considered, the maximum duration time (Td) of the discovery channel may be calculated using Equation 14 below in order to avoid a collision with the SRS transmission.

[Equation 14]

$$Td = T2 - T1 = 1\ ms - 2 \times (Tx/Rx\ \text{switching time}) - Max\ RTD/2 - SRS\ \text{symbol time}$$

According to this scheme, a relatively short CP (i.e. the normal CP) may be used. In the case of an RRC_CONNECTED terminal, the RRC_CONNECTED terminal may estimate an approximate distance between a terminal transmitting the discovery channel and the RRC_CONNECTED terminal by estimating a timing of the received discovery channel and comparing the timing with its own TA value. On the other hand, since it is necessary for the terminal to continuously perform SRS transmission, power control, TA reception or the like in order to maintain uplink synchronization, power consumption and signaling overhead increase.

When the reception-to-transmission (Rx-to-Tx) switching time is not secured in the discovery subframe, T1 and T2 may be represented as shown in the following equation.

[Equation 15]

$$T1 = [T\_DL(n) + T\_UL(n)]/2$$

When the discovery subframe is not allocated in a SRS subframe (when the discovery subframe is allocated while avoiding all the SRS subframes), T2 may be calculated using Equation 16 below.

[Equation 16]

$$T2 = [T\_DL(n+1) + T\_UL(n+1)]/2 - Max\ RTD/2$$

If a possibility of allocating the discovery subframe in a SRS subframe is considered, T2 may be calculated using Equation 17 below in order to avoid a collision with the SRS transmission.

[Equation 17]

$$T2 = [T\_DL(n+1) + T\_UL(n+1)]/2 - Max\ RTD/2 - SRS\ symbol\ time$$

When the discovery subframe is not allocated in a SRS subframe (when discovery subframe is allocated while avoiding all the SRS subframes), the maximum duration time (Td) of the discovery subframe may be calculated using Equation 18 below.

[Equation 18]

$$Td = T2 - T1 = 1ms - Max\ RTD/2$$

When a possibility of allocating the discovery subframe in a SRS subframe is considered, the maximum duration time (Td) of the discovery subframe may be calculated using Equation 19 below in order to avoid a collision with the SRS transmission.

[Equation 19]

$$Td = T2 - T1 = 1ms - Max\ RTD/2 - SRS\ symbol\ time$$

When temporally consecutive N subframes are allocated as the discovery subframes, Max RTD has only to be considered in only the $N^{th}$ subframe which is a last subframe among the consecutive N subframes. In other words, in the $N^{th}$ subframe, the Max RTD value is determined in consideration of the size of the cell in Equation 12 representing T2 and Equations 13 and 14 representing the maximum duration time (Td) of the discovery subframe. On the other hand, for each of (N-1) subframes other than the $N^{th}$ subframe, the Max RTD value does not have to be considered in Equations 12, 13 and 14, and accordingly Max RTD should be regarded as 0.

Accordingly, if the last SC-FDMA symbol is not used for discovery channel transmission in consideration of the possibility of allocating the discovery subframe in a SRS subframe for each of (N-1) subframes other than the $N^{th}$

subframe, thirteen SC-FDMA symbols may be used for discovery channel transmission when the normal CP is used for the subframe, and eleven SC-FDMA symbols may be used for discovery channel transmission when the extended CP is used. When the discovery subframe is not allocated in a SRS subframe (when the discovery subframe is allocated while avoiding all the SRS subframes), fourteen SC-FDMA symbols may be used for discovery channel transmission when the normal CP is used for the subframe, and twelve SC-FDMA symbols may be used for discovery channel transmission when the extended CP is used.

In the case of the $N^{th}$ subframe, when the last symbol is not used in consideration of the possibility of the SRS transmission in the discovery subframe, 13 or less SC-FDMA symbols may be used according to a size of Max RTD as described above, and when the discovery subframe is not allocated in a SRS subframe (when the discovery subframe is allocated while avoiding all the SRS subframes), 14 or less SC-FDMA symbols may be used according to the size of Max RTD as described above.

The base station may configure the number of SC-FDMA symbols to be used in the $N^{th}$ subframe (the last discovery subframe in allocation of the temporally consecutive subframes) and inform the terminal of the number.

Hereinafter, a structure of the discovery channel will be described in detail.

One discovery channel may include a demodulation reference signal (DM RS) and a broadcasting channel. The DM RS may serve as a synchronization signal and a reference signal for demodulation of the broadcasting channel. The broadcasting channel may be used to transmit a terminal ID of the terminal and a service ID.

The discovery channel may include a plurality of resource block groups (discovery-resource block groups; D-RBG). One discovery channel may use a maximum of one D-RBG per slot.

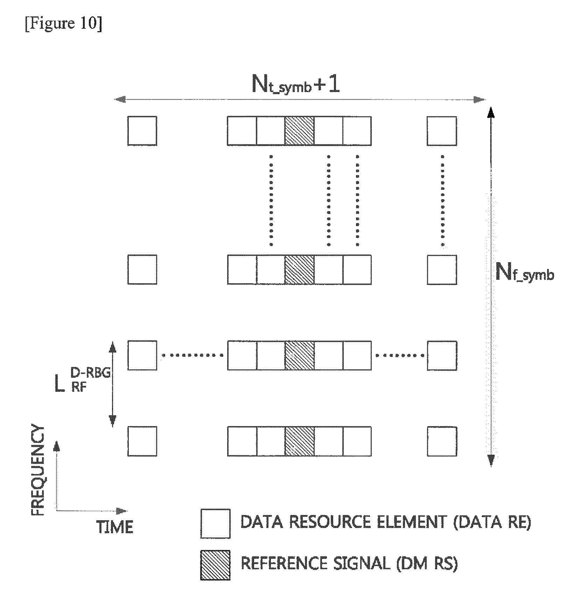

FIG. 10 is a conceptual diagram illustrating a resource mapping structure of a D-RBG in a frequency-time resource space.

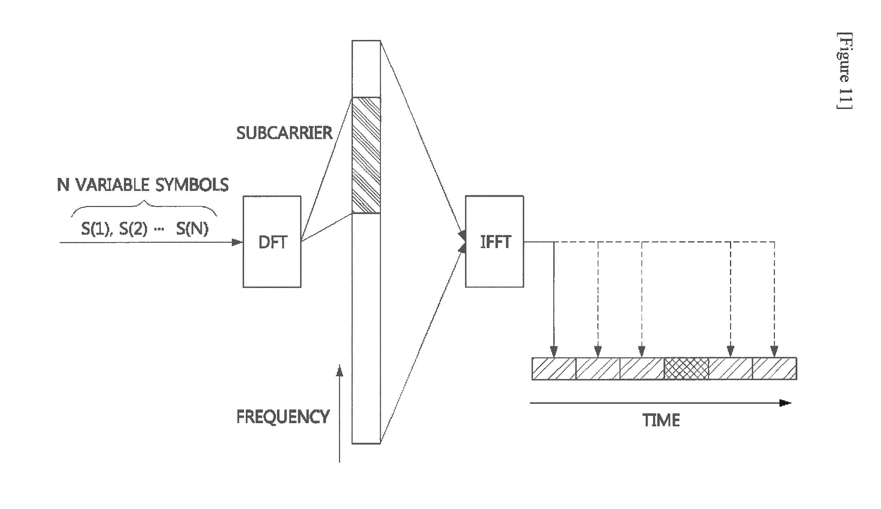

Referring to FIG. 10, resource elements constituting the D-RBG may be consecutive on a time axis. The resource elements constituting the D-RBG may be consecutive or at uniform intervals on a frequency axis. Data may be generated in an SC-FDMA (= DFT-S-OFDM) scheme illustrated in FIG. 11 based on single antenna port transmission. FIG. 11 is a conceptual diagram illustrating an SC-FDMA transmission structure.

Here, $L_{RF}^{D-RBG}$ is a repetition factor value indicating the number of repetitions of symbols before DFT in SC-FDMA transmission, and corresponds to an interval between resource elements (REs) which are adjacent on the frequency axis. The repetition factor value of 1 indicates continuous allocation on the frequency axis.

The DM RS is transmitted for demodulation of the discovery channel and may be used to acquire synchronization. Positions on the frequency axis of the resource elements used for transmission of the DM RS may be the same as positions of the data resource elements. On the time axis, the resource elements used for transmission of the DM RS may occupy one SC-FDMA symbol located at a center among the SC-FDMA symbols participating in the D-RBG transmission.

Resources to be used by the discovery channel may be determined based on a time axis resource number and a frequency axis resource number. The time axis resource number may determine a subframe used by the discovery channel. The frequency axis resource number may determine a frequency resource to be used by the discovery channel in the subframe. In other words, D-RBG resource mapping to be used for discovery channel transmission may be determined.

Hereinafter, discovery resource mapping will be described in detail.

A subframe in which the discovery channel can be transmitted (i.e. a discovery subframe) may be configured through SIB information by the base station. Uplink subframes satisfying a condition of Equation 20 below may be used for discovery channel transmission.

$$[\text{Equation 20}]$$

$$\left[ \left( 10 \cdot n_f + \lfloor n_s / 2 \rfloor \right) \bmod 8 \right] \in \Delta_{DSC}$$

Here, $n_f$ denotes a system frame number (SFN) and $n_s$ denotes a slot number in a radio frame.

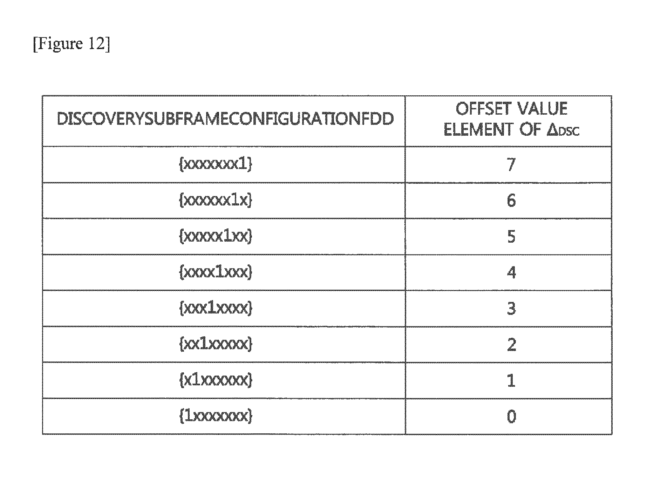

A set $\Delta_{DSC}$ may have an offset value as an element. The base station may provide a bitmap *discoverySubframeConfigurationFDD* consisting of eight bits to the terminal, and offset value elements constituting $\Delta_{DSC}$ is determined as shown in the table of FIG. 12 according to a form of the provided bitmap. FIG. 12 is a table illustrating an uplink subframe setting (in FDD) for discovery channel transmission. In the table of FIG. 12, × indicates that a bit value is 0 or 1.

The base station may signal information for a temporal structure of the discovery channel to the terminal.

Specifically, the terminal may be configured with $N_{t,dc}$, $N^{DC}_{subframe}$, $N_{df}$ values by the base station, and may determine the following parameters according to the configured values. $N^{DC}_{subframe}$: The number of discovery subframes occupied by one discovery channel. $N^{DC\_Frame}_{subframe} = N^{DC}_{subframe} \times N_{t,dc}$: The number of discovery subframes occupied by one discovery frame. $N^{DC\_hop}_{subframe} = N_{t,dc} \times N^{DC}_{subframe} \times N_{df}$: The number of discovery subframes occupied by a discovery hopping process of one period.

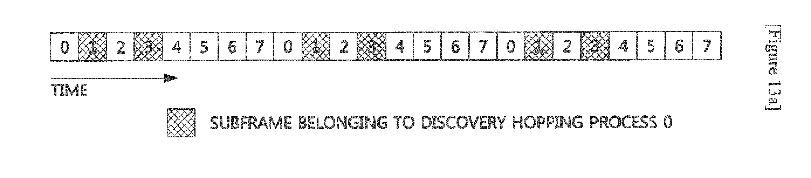

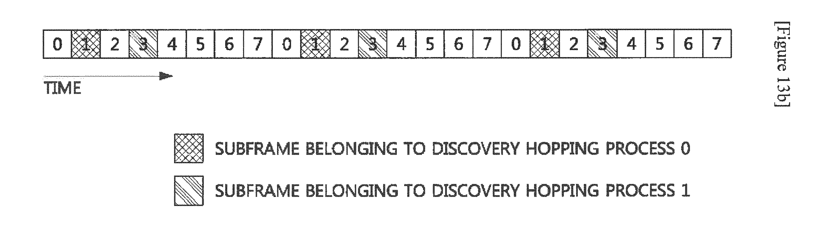

In discovery hopping process allocation scheme 1, one discovery hopping process may be formed using all subframes indicated by the set $\Delta_{DSC}$. As shown in FIG. 13a, the subframes corresponding to a plurality of uplink H-ARQ processes may be allocated as one discovery hopping process. FIGS. 13a and 13b are conceptual diagrams illustrating an embodiment of subframe allocation in the discovery hopping process. When the number of elements of the set $\Delta_{DSC}$ is K, the cycle $T_{DC\_hop}$ of the discovery hopping process may be represented using the number of subframes as shown in Equation 21 below.

[Equation 21]

$$T_{DC\_hop} = \left\lceil \frac{8 \cdot N^{DC\_hop}_{subframe}}{K} \right\rceil$$

(in subframe (ms))

In the discovery hopping process allocation scheme 2, one discovery hopping process may be formed using the subframes corresponding to the respective elements of the set $\Delta_{DSC}$. In other words, as many independent discovery hopping processes as the number of set $\Delta_{DSC}$ elements may be used. The subframes (at an interval of 8ms) corresponding to one H-ARQ process may be allocated to one discovery hopping process, as shown in FIG. 13b.

In discovery hopping process allocation schemes 1 and 2, allocating of resources using the H-ARQ process unit as a basic allocation unit is intended to minimize the number of uplink cellular HARQ processes colliding with the discovery hopping process.

In the resource allocation using semi-persistent-scheduling (SPS) of LTE, SPS time intervals are 10, 20, 32, 40, 64, 80, 128, 160, 320, and 640 (ms). Among them, 10 ms and 20ms are not an integral multiple of 8ms, and accordingly, use of discovery resource allocation of a 8ms period as described above may not avoid collision in which SPS allocation and discovery resource allocation for one terminal occur in the same subframe. In order to avoid the collision in which resources allocated using SPS having periods of 10 ms and 20 ms and the discovery resources occur in the same subframe, a set of subframes corresponding to an interval of 5 ms or 10 ms rather than 8 ms may be used as a basic resource allocation unit of the discovery hopping process. However, since the SPS allocation corresponds to an initial transmission interval of HARQ and retransmission occurs at intervals of 8 ms from the initial transmission, permission of the retransmission makes it still difficult to avoid the collision with the discovery resource allocation. Therefore, in such an SPS resource allocation scheme, the retransmission may not be used.

Hereinafter, the discovery subframe is assumed to be allocated using subframes of an 8 ms period as a basic allocation unit.

The period $T_{DC\_hop}$ of the hopping process may be represented by the number of subframes, as shown in Equation 22 below.

[Equation 22]

$$T_{DC\_hop} = 8 \cdot N^{DC\_hop}_{subframe}$$

(in subframe (ms))

In discovery hopping process allocation scheme 1, an offset $T_{DC\_hop\_offset}$ of the discovery hopping process represented in units of subframes may be represented using Equation 23 below.

[Equation 23]

$$T_{DC\_hop\_offset} = 8K + J , \quad J \in \Delta_{DSC}$$

Here, values of K and J are configured by the base station, and the terminal may regard a subframe satisfying a condition of Equation 24 below as a first subframe from which a discovery hopping process period starts.

[Equation 24]

$$(10 \cdot n_f + k_{DC} - T_{DC\_hop\_offset}) \mod T_{DC\_hop} = 0$$

Here, $K_{DC} = \{0,1,...,9\}$ denotes a subframe number in a radio frame. The discovery hopping process period $T_{DC\_hop}$ may be greater than $2^{10} \times 10$ ms, which is a period of the system frame number. In this case, a number having a period longer than the system frame number period may be given in order to indicate the discovery hopping process having a long period. For this, a super system frame number having a size of 10 bits may be introduced. The super system frame number is a number attached to a set of $2^{10}$ radio frames, and the value of the super system frame number cyclically increase by 1 in every $2^{10} \times 10$ subframes and is a value in a range of $[0, (2^{10}-1)]$. The super system frame number may be included in the SIB and transmitted so that any terminal in the cell may recognize the super system frame number.

When represented using the super system frame number, a subframe satisfying a condition of Equation 25 below may be regarded as a first subframe from which the discovery hopping process period starts.

[Equation 25]

$$(10 \cdot 2^{10} \cdot n_{sf} + 10 \cdot n_f + k_{DC} - T_{DC\_hop\_offset}) \mod T_{DC\_hop} = 0$$

Here, $n_{sf}$ denotes the super system frame number (SSFN), $n_f$ denotes the system frame number (SFN), and $k_{DC} = \{0,1...,9\}$ denotes a subframe number in a radio frame.

In the discovery hopping process allocation scheme 2, each discovery hopping process may correspond to one offset element value in the set $\Delta_{DSC}$. When one offset element value belonging to the set $\Delta_{DSC}$ is J, a first subframe of the discovery hopping process period corresponding to this offset element value is a subframe satisfying a condition of Equation 26 below.

[Equation 26]

$$(10 \cdot n_f + k_{DC} - T_{DC\_hop\_offset} - J) \mod T_{DC\_hop} = 0$$

The discovery hopping process offset $T_{DC\_hop\_offset}$ may be set by the base station.

When the super system frame number is used for representation and one offset element value belonging to the set $\Delta_{DSC}$ is J, a first subframe of the discovery hopping process period corresponding to this offset element value is a subframe satisfying a condition of Equation 27 below.

[Equation 27]

$$(10 \cdot 2^{10} \cdot n_{sf} + 10 \cdot n_f + k_{DC} - T_{DC\_hop\_offset} - J) \bmod T_{DC\_hop} = 0$$

Here, $n_{sf}$ denotes the super system frame number (SSFN), $n_f$ denotes the system frame number (SFN), and $k_{DC}$ denotes a subframe number in the radio frame.

For a given discovery hopping process, resources used by one discovery channel may be determined by the time axis resource number and the frequency axis resource number. The time axis resource number may determine the subframe to be used by the discovery channel, and the frequency axis resource number may determine frequency resources to be used by the discovery channel in the subframe.

The discovery resources occupied by the discovery channel may be cellular resources and frequency division multiplexing (FDM) in the subframe.

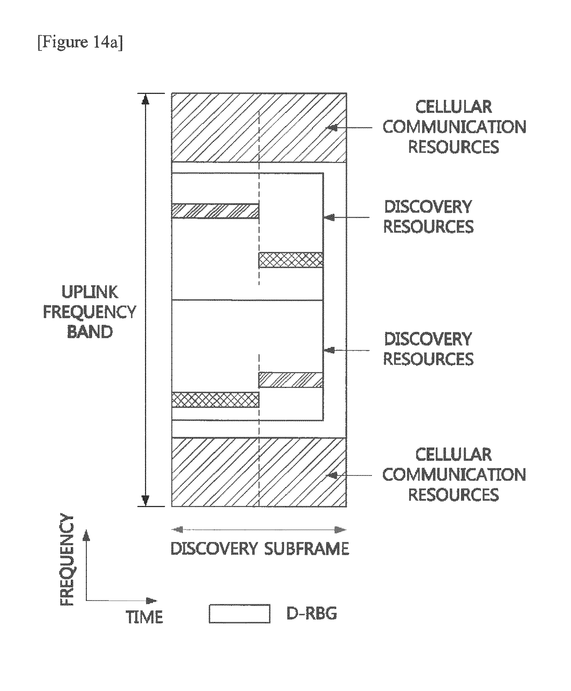

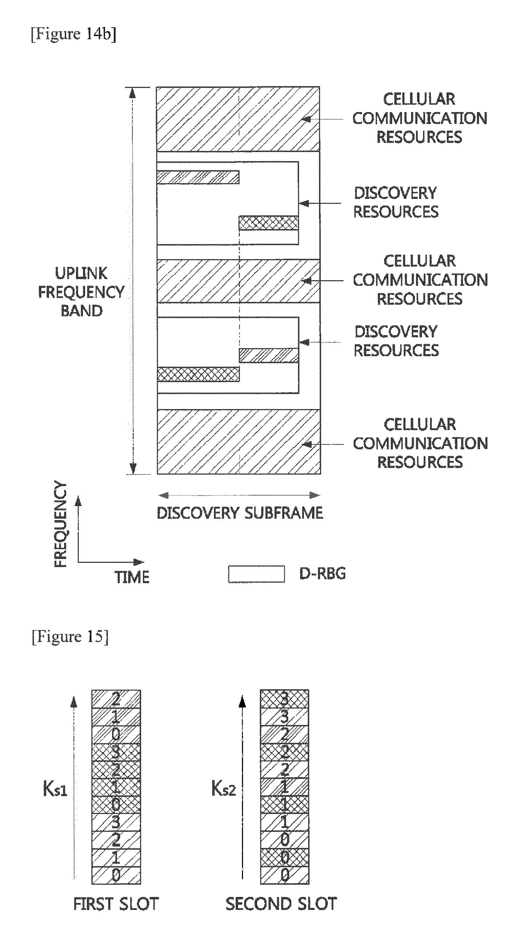

FIGS. 14a and 14b are conceptual diagrams illustrating an embodiment of discovery resource multiplexing and frequency domain hopping of the D-RBG. Referring to FIGS. 14a and 14b, an example of multiplexing of discovery resources and cellular resources in the subframe in which there is the discovery channel (i.e. the discovery subframe) is shown.

An entire band may be allocated for discovery resources. Since interference may occur between the discovery resources and the cellular resources when there is mismatch in symbol timing and the CP length, a guard band may be configured between the discovery resources and the cellular resources to mitigate such interference. Further, a guard band may be set between the discovery resources and cellular communication resources in order to reduce a problem associated with a near-far effect.

In order to reduce a problem that the discovery channel having a very high intensity is received together with a cellular signal due to the near-far effect, the base station applies RF filtering to the received signal to filter out a band corresponding to the discovery resource area. Similarly, in order to reduce a problem that a cellular uplink having very high intensity is received with the discovery channel, the terminal receiving the discovery channel can perform RF filtering on the received signal to filter out a band corresponding to the cellular communication resource area.

Frequency hopping may be applied to the discovery channel in order to acquire a frequency diversity effect. The frequency hopping may be performed in units of D-RBGs. In other words, positions on the frequency axis of a plurality of D-RBGs constituting one discovery channel may be spaced in order to acquire the frequency diversity effect. In one subframe, two D-RBGs belonging to the same discovery channel may be mapped to a first slot and a second slot as shown in FIGS. 14a and 14b, and two D-RBGs can be spaced on the frequency axis to acquire the frequency diversity effect.

If the number of resource blocks (RBs) participating in one D-RBG transmission is $N_{\mathrm{RB}}^{\mathrm{D\text{-}RBG}}$, the number of subcarriers is $N_{sc}^{\mathrm{D\text{-}RBG}} = N_{\mathrm{RB}}^{\mathrm{D\text{-}RBG}} N_{sc}^{RB}$. If a value of the repetition factor of the D-RBG transmission (which corresponds to a subcarrier interval) is $L_{\mathrm{RF}}^{\mathrm{D\text{-}RBG}}$ and the maximum number of D-RBGs which can be transmitted per slot is $N_{D\text{-}RBG}^{slot}$, the total number $N_{sc}^{\mathrm{DC\,BW}}$ of subcarriers in an entire band allocated for transmission of the D-RBGs is as shown in Equation 28 below.

[Equation 28]

$$N_{sc}^{\mathrm{DC\,BW}} = \frac{N_{D\text{-}RBG}^{slot}}{L_{\mathrm{RF}}^{\mathrm{D\text{-}RBG}}} \cdot N_{sc}^{\mathrm{D\text{-}RBG}}$$

Accordingly, the number $N_{\mathrm{RB}}^{\mathrm{DC\,BW}}$ of RBs occupied by the entire discovery band allocated for transmission of the D-RBGs is as shown in Equation 29 below.

[Equation 29]

$$N_{\text{RB}}^{\text{DC BW}} = \frac{N_{D-RBG}^{slot}}{L_{\text{RF}}^{\text{D-RBG}}} \cdot N_{\text{RB}}^{\text{D-RBG}}$$

The frequency hopping in units of slots may be applied in order to maximize the frequency diversity effect within the discovery resource band during one discovery channel transmission period. The position of the D-RBG constituting one discovery channel may be changed as the slot is changed in the frequency domain. Further, adjacent D-RBGs in one slot may be located apart from each other at a certain interval or more in a next slot in order to randomize interference between the discovery channels. Further, a position in the frequency domain of the first D-RBG of the discovery channel may be changed at random over time, and accordingly, the frequency diversity effect and the interference randomization effect are further improved.

The discovery frame may have $N_{subframe}^{DC\_Frame}$ discovery subframes. Each discovery subframe may include two slots, and one discovery channel may occupy $N_{subframe}^{DC}$ consecutive discovery subframes.

Hereinafter, D-RBG resource mapping in the first slot of each discovery subframe will be described in detail. The frequency resource number of the discovery channel is assumed to be m. When a start physical resource block (PRB) number of the D-RBG corresponding to the frequency resource number m in the first slot of the discovery subframe i in the discovery frame is $n_{PRB}^{D-RBG\_S1}(m,i)$, Equations 30 and 31 below may be obtained.

[Equation 30]

$$\text{If } \left\lfloor \frac{m}{L_{\text{RF}}^{\text{D-RBG}}} \right\rfloor \text{mod} 2 = 0,$$

$$n_{PRB}^{D-RBG\_S1}(m,i) = \tilde{n}_{PRB}^{D-RBG\_S1}(m,i) + N_{RB}^{DCHO\_offset1}$$

[Equation 31]

$$\text{If } \left\lfloor \frac{m}{L_{\text{RF}}^{\text{D-RBG}}} \right\rfloor \text{mod} 2 = 1,$$

$$n_{PRB}^{D-RBG\_S1}(m,i) = \tilde{n}_{PRB}^{D-RBG\_S1}(m,i) + (N_{RB}^{UL} - N_{RB}^{DCHO\_offset2})$$

Here, the frequency hopping offsets $N_{RB}^{DCHO\_offset1}$ and $N_{RB}^{DCHO\_offset2}$ of the discovery channel may be set by the base station.

[Equation 32]

$$\widetilde{n}_{PRB}^{D-RBG\_S1}(m,i) = \left\lfloor \frac{k_{S1}(m,i)}{L_{RF}^{D\text{-}RBG}} \right\rfloor \cdot N_{RB}^{D\text{-}RBG}$$

Here, $N_{RB}^{D\text{-}RBG}$ denotes the number of RBs participating in one D-RBG transmission. When a start PRB number of the D-RBG corresponding to the frequency resource number m in the second slot of the discovery subframe i is $n_{PRB}^{D-RBG\_S2}(m,i)$, Equations 33 and 34 below may be obtained.

[Equation 33]

$$\text{If} \quad \left\lfloor \frac{m}{L_{RF}^{D\text{-}RBG}} \right\rfloor \mathrm{mod}\, 2 = 0 ,$$

$$n_{PRB}^{D-RBG\_S2}(m,i) = \widetilde{n}_{PRB}^{D-RBG\_S2}(m,i) + (N_{RB}^{UL} - N_{RB}^{DCHO\_offset2})$$

[Equation 34]

$$\text{If} \quad \left\lfloor \frac{m}{L_{RF}^{D\text{-}RBG}} \right\rfloor \mathrm{mod}\, 2 = 1 ,$$

$$n_{PRB}^{D-RBG\_S2}(m,i) = \widetilde{n}_{PRB}^{D-RBG\_S2}(m,i) + N_{RB}^{DCHO\_offset1}$$

$$\widetilde{n}_{PRB}^{D-RBG\_S2}(m,i) = \left\lfloor \frac{k_{S2}(m,i)}{L_{RF}^{D\text{-}RBG}} \right\rfloor \cdot N_{RB}^{D\text{-}RBG}$$

Here, $N_{RB}^{D\text{-}RBG}$ denotes the number of RBs participating in one D-RBG transmission.

Hereinafter, a method of calculating $k_{S1}(m,i)$ and $k_{S2}(m,i)$ will be described in detail. $M = \left\lceil \dfrac{N_{D-RBG}^{slot}}{2} \right\rceil$ is defined. If $\left(i \bmod N_{subframe}^{DC}\right) = 0$ (i.e., if a discovery subframe is the first discovery subframe in each discovery channel transmission period) when the index of the discovery subframe belonging to the discovery hopping process period is defined as i, Equation 35 below may be obtained.

[Equation 35]

$$k_{S1}(m,i) = \left( L_{RF}^{D\text{-}RBG} \cdot \left\lfloor \frac{m}{2L_{RF}^{D\text{-}RBG}} \right\rfloor + m \bmod L_{RF}^{D\text{-}RBG} + f_{hop}\left( i/N_{subframe}^{DC} \right) \right) \bmod M$$

$$k_{S2}(m,i) = \left[ (k_{S1}(m,i) \bmod Q) x \left\lceil \frac{M}{Q} \right\rceil + \left\lfloor \frac{k_{S1}(m,i)}{Q} \right\rfloor \right] \bmod M$$

Here, an integer in a range of $[0, 2^9-1]$ may be generated at random using c(10i+1), c(10i+2), ..., c(10i+9) for each i through Equation 36 below.

[Equation 36]

$$f_{hop}(i) = \begin{cases} 0 & M = 1 \\ \left( f_{hop}(i-1) + \sum_{k=i10+1}^{i10+9} c(k) \times 2^{k-(i10+1)} \right) \bmod M & M = 2 \\ \left( f_{hop}(i-1) + \left( \sum_{k=i10+1}^{i10+9} c(k) \times 2^{k-(i10+1)} \right) \bmod(M-1)+1 \right) \bmod M & M > 2 \end{cases}$$

If $\left( i \bmod N_{subframe}^{DC} \right) \geq 1$ (i.e., if it is one of discovery subframes other than the first discovery subframe in each discovery channel transmission period), may be represented as shown in Equation 37 below.

[Equation 37]

$$k_{S1}(m,i) = \left( (k_{S2}(m,i-1) \bmod Q) x \left\lceil \frac{M}{Q} \right\rceil + \left\lfloor \frac{k_{S2}(m,i-1)}{Q} \right\rfloor + \left\lfloor \frac{M}{N_{subframe}^{DC}} \right\rfloor \right) \bmod M$$

$$k_{S2}(m,i) = \left[ (k_{S1}(m,i) \bmod Q) x \left\lceil \frac{M}{Q} \right\rceil + \left\lfloor \frac{k_{S1}(m,i)}{Q} \right\rfloor \right] \bmod M$$

Hereinafter, grouping and shuffling used for $k_{S1}(m,i)$ and $k_{S2}(m,i)$ index mapping will be described in detail.

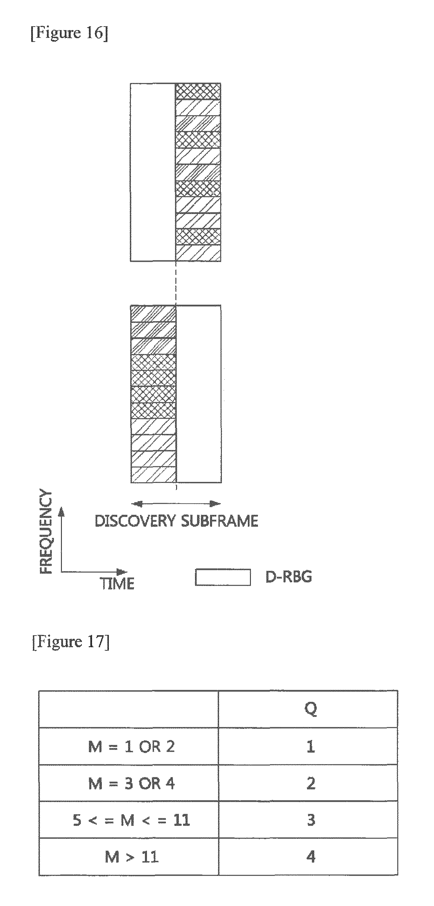

FIG. 15 is a conceptual diagram illustrating a change in an index by grouping and shuffling, and FIG 16 is a conceptual diagram illustrating an embodiment of grouping/shuffling and frequency hopping.
Referring to FIGS. 15 and 16, effects of the grouping and the shuffling can be seen. Through the grouping and the shuffling, D-RBGs adjacent in the frequency domain within one slot are located apart from each other in the next slot. This is intended to randomize large interference of discovery channels out of frequency or time synchronization with adjacent discovery channels, by changing the adjacent channels through the grouping and the shuffling.
Adjacent $k_{S1}(m,i)$ may be selected by Q and grouped, $k_{S1}(m,i)$ having a smaller value fist selected.

When $M = \left\lceil \dfrac{N_{D-RBG}^{slot}}{2} \right\rceil$ is defined, a total number of groups is $\left\lceil \dfrac{M}{Q} \right\rceil$. $k_{S2}(m,i)$ may be represented as shown in Equation 38 below.

[Equation 38]

$$k_{S2}(m,i) = \left[ (k_{S1}(m,i) \bmod Q) x \left\lceil \frac{M}{Q} \right\rceil + \left\lfloor \frac{k_{S1}(m,i)}{Q} \right\rfloor \right] \bmod M$$

It can be seen that for Q or less $k_{S1}(m,i)$ belonging to the same group among $k_{Si}(m,i)$ (= 0, 1,..., M-1) (Q or less $k_{S1}(m,i)$ in the case of a last group), in the second slot, an $k_{S2}(m,i)$ index interval therebetween is $\left\lceil \dfrac{M}{Q} \right\rceil$ and a minimum index is $\left\lfloor \dfrac{k_{S1}(m,i)}{Q} \right\rfloor$.

It is determined based on a value of the parameter M used for grouping and shuffling, but it is desirable for a maximum index not to exceed (M-1). Therefore, if $M \bmod Q \neq 0$, Equation 39 below should be satisfied.

[Equation 39]

$$(Q-1) \cdot \left\lceil \frac{M}{Q} \right\rceil \leq (M-1)$$

FIG. 17 is a table illustrating an example of the Q value according to the M value.

In the above, $f_{hop}(i)$ yields an effect that a position in the frequency domain of the first D-RBG of the discovery channel changes at random in a determined frequency domain over time. The random sequence for $f_{hop}(i)$ may be created based on the following scheme.

[Equation 40]

$$f_{hop}(i) = \begin{cases} 0 & M=1 \\ \left( f_{hop}(i-1) + \sum\limits_{k=i\cdot10+1}^{i\cdot10+9} c(k) \times 2^{k-(i\cdot10+1)} \right) \bmod M & M=2 \\ \left( f_{hop}(i-1) + \left( \sum\limits_{k=i\cdot10+1}^{i\cdot10+9} c(k) \times 2^{k-(i\cdot10+1)} \right) \bmod(M-1)+1 \right) \bmod M & M>2 \end{cases}$$

$f_{hop}(-1) = 0$, a pseudo-random sequence $c(i)$ may be generated based on a well-known method (i.e., TS 36.211, sec 7.2 Pseudo-random sequence generation), and initialization may be perform as follows.

Initialization of the sequence generator may be performed in the first discovery subframe of the discovery hopping process in each discovery hopping process period.

In this case, a value according to Equation 41 below may be used as $c_{init}$ for initialization.

[Equation 41]

$$c_{\text{init}} = 10 \cdot n_f + (k_s + \Delta_s)$$

Here, $n_f$ denotes a system subframe number (SFN) in the first discovery subframe position of the discovery hopping process and $k_s$ denotes a subframe number in a radio frame in the first discovery subframe position of the discovery hopping process.

Using a super system frame number (SSFN), Equation 42 below may be obtained.

[Equation 42]

$$c_{\text{init}} = 10 \cdot 2^{10} \cdot n_{sf} + 10 \cdot n_f + (k_s + \Delta_s)$$

Here, $n_{sf}$ and $n_f$ denote SSFN and SFN in the position of the first discovery subframe of the discovery hopping process, respectively, and $k_s$ denotes a subframe number in the radio frame in the position of the first discovery subframe of the discovery hopping process.

When there is a difference in subframe number between the cells due to interference control or the like, $\Delta_s$ for compensating for this may be signaled to the terminal. This is intended to match initial values of the discovery channels transmitted in the same time period regardless of the cells. Generally, an initialization condition may be represented using Equation 43 below.

[Equation 43]

$$c_{\text{init}} = f(n_{sf}^0, n_f^0, k_s^0)$$

When there is a difference in super system frame number, frame number, and subframe number between the cells, the base station may signal $\Delta_{sf}$, $\Delta_f$ and $\Delta_s$ for compensating for this to the terminal. In this case, the terminal may

determine $c_{\text{init}} = f(n_{sf}^0, n_f^0, k_s^0)$ using Equation 44 below.

[Equation 44]

$$n_{sf}^0 = n_{sf} + \Delta_{sf}$$

$$n_f^0 = n_f + \Delta_f$$

$$k_s^0 = k_s + \Delta_s$$

Here, $n_{sf}$ and $n_f$ denote the super system frame number and the system frame number of the cell that the terminal belongs to, respectively, and $k_s = \{0,1,...,9\}$ denotes the subframe number in the radio frame of the cell that the terminal belongs to.

Resource elements $(k,l)$ used for transmission of the D-RBG corresponding to the frequency resource number m in the first slot of the discovery subframe i in the discovery frame are as follows. When a start physical resource block (PRB) is $n_{PRB}^{D-RBG\_S1}(m,i)$, Equation 45 below may be obtained.

[Equation 45]

$$k_{TC} = k_{S1}(m,i)\operatorname{mod}(L_{RF}^{\text{D-RBG}})$$

$$k = n_{PRB}^{D-RBG\_S1}(m,i)N_{sc}^{RB} + L_{RF}^{\text{D-RBG}} \cdot p + k_{TC}$$

Here, $p = 0,...,\dfrac{N_{RB}^{D-RBG} \cdot N_{sc}^{RB}}{L_{RF}^{D-RBG}} - 1$, $N_{sc}^{RB}$ is the number of subcarriers of one PRB. In other words, $N_{sc}^{RB} = 12$.

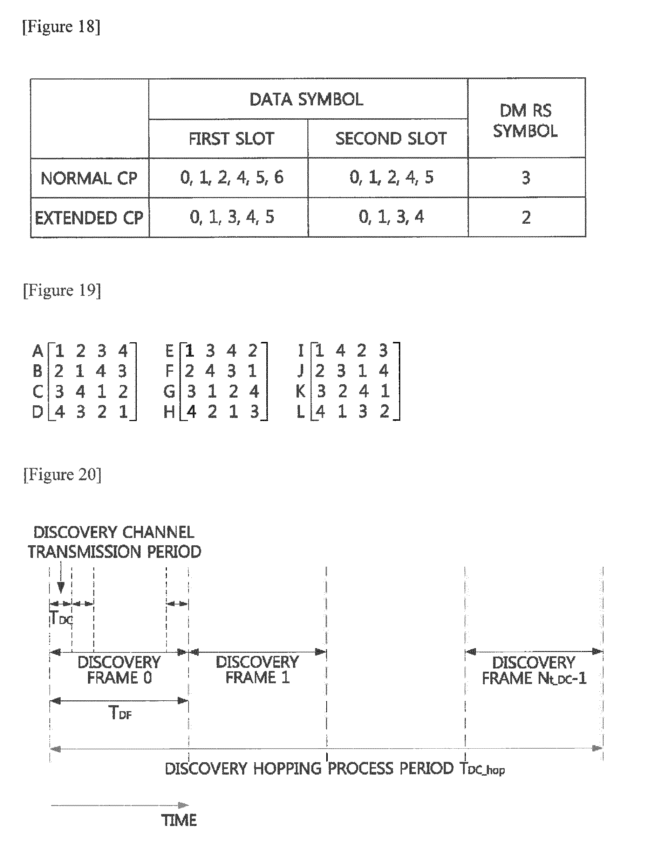

The SC-FDMA symbol used for data transmission and the SC-FDMA symbol used for DM RS transmission are as shown in a table of FIG. 18. FIG. 18 is a table illustrating a SC-FDMA symbol number used for transmission of D-RBG data and DM RS. In the table shown in FIG. 17, use of the SC-FDMA symbol of FIGS. 5 and 6 is assumed.

Similarly, when that the frequency resource number is m, the resource elements $(k, l)$ used for transmission of the D-RBG in the second slot of the discovery subframe i in the discovery frame are as follows. When a start physical resource block (PRB) is $n_{PRB}^{D-RBG\_S2}(m,i)$, Equation 46 below may be obtained.

[Equation 46]

$$k_{TC} = k_{S2}(m,i)\operatorname{mod}(L_{RF}^{\text{D-RBG}})$$

$$k = n_{PRB}^{D-RBG\_S2}(m,i)N_{sc}^{RB} + L_{RF}^{\text{D-RBG}} \cdot p + k_{TC}$$

Here, $p = 0,...,\dfrac{N_{RB}^{D-RBG} \cdot N_{sc}^{RB}}{L_{RF}^{D-RBG}} - 1$

The SC-FDMA symbol used for data transmission and the SC-FDMA symbol used for DM RS transmission are as shown in table of FIG. 18.

Hereinafter, time domain resource mapping will be described in detail. Matters to be considered for discovery channel mapping in the time domain are as follows. A terminal transmitting a discovery signal according to a half-duplexing operation does not receive discovery signals which other terminals transmit during its own transmission time. When a plurality of discovery signals are received in the same reception time period, since reception power of a terminal located in a relatively far position is smaller than reception power of an adjacent terminal, the discovery signal of the terminal located in a far position may not be correctly detected due to a resolution limit of an analog-to-digital converter (ADC) resulting from automatic gain control (AGC) adaptation.

Time axis hopping based on a Latin square matrix may be applied in order to overcome issues of non-detection (detection-missing) and de-sensing problems due to the half-duplexing operation of the terminal and the near-far effect between the terminals.

The Latin square matrix having a size of N×N may have the following characteristics. Each of elements constituting each row has one of 1, 2, ..., N, and the elements of the same row have different values. In other words, in one row, the numbers 1, 2, ..., N do not overlap. Each of elements constituting each column has one of 1, 2, ..., N, and the elements of the same column have different values. In other words, in one column, the numbers 1, 2, ..., N do not overlap. When any two rows in one Latin square are compared, there are no same numbers in the same element positions. When any two columns in one Latin square are compared, there are no same numbers in the same element positions.

Cyclic shift may be performed on positions of columns other than the first column of the Latin square of N×N which is symmetric in a natural order to generate N×N matrixes. Since one matrix may be acquired in each cyclic shift, (N-2) matrixes may be generated through cyclic shifting of columns. Each generated matrix is a Latin square matrix satisfying Latin square characteristics. The number of all Latin square matrixes including the Latin square matrix which is symmetric in natural order is (N-1).

The (N-1) Latin square matrixes may have the following additional characteristics. When any two rows in different Latin square matrixes are compared, the same number is generated once in the same element positions. When any two columns in the different Latin square matrixes are compared, the same number is generated once in the same element positions.

N×(N-1) rows may be acquired from the (N-1) Latin square matrixes and, when any two rows of these rows are compared, the same number is generated at most once in the same element positions. FIG. 19 is a conceptual diagram illustrating an embodiment of the Latin square matrix having a size of 4×4.

The characteristic of the Latin square matrices may be applied to time domain resource mapping of the discovery channels. The rows of the Latin square matrix may be set to correspond to time axis resource mapping patterns of the discovery channels. Further, when N rows belonging to one Latin square matrix is set to correspond to the time axis resource mapping patterns of the N discovery channels, the N discovery channels may be mapped to non-overlapping resources on the time axis. Therefore, since the discovery channels do not overlap on the time axis even when the discovery channels are mapped to the same resources on the frequency axis, the discovery channels do not overlap each other (i.e., are orthogonal to each other) in a time-frequency resource space.

On the other hand, different frequency resources may be set to correspond to different Latin square matrixes. Since a total of (N-1) Latin square matrixes may be acquired for an order N, a total of (N-1) non-overlapping resources on the frequency axis may be allocated. In other words, each resource may be set to correspond to one of the (N-1) Latin square matrixes in one-to-one correspondence.

FIG. 20 is a conceptual diagram illustrating an embodiment of time domain division for discovery channel mapping.

Three parameters may be defined as follows.

$T_{DC\_hop}$: A period of a discovery hopping process; a hopping period of the discovery resources in the time domain

$T_{DF}$: A length of the discovery frame

$T_{DC}$: A transmission period length of the discovery channel

Further, $T_{DC\_hop}$ may be divided into $N_{DF}$ time segments. Each time segment corresponds to one discovery frame, and a temporal length is $T_{DF}$. The discovery frame may be divided into $N_{t\_DC}$ time segments, and a length of each time segment is a transmission period length $T_{DC}$ of the discovery channel.

When each discovery channel occupies one unit resource in the frequency domain and $N_{t\_DC}$ unit resources may be mapped for the discovery channels in the frequency domain, a maximum of $N_{t\_DC} \times N_{f\_DC}$ discovery channels can be transmitted through one discovery frame. Here, the unit resource in frequency domain means the frequency resource which one D-RBG occupies in one slot.

Hereinafter, a method of generating a Latin square matrix having an order of $2^n$ (i.e. a size of $2^n \times 2^n$) will be described in detail. A vector T(m) having $2^n$ elements is considered. Each element is an integer in a range of $[0, 2^n-1]$. A value of each element may be represented by a binary number having n digits, a(0)a(1)a(2), ..., a(n-1).

When T(0) = (00..0, 000..01, 000..10,..., 111...1). $q = \left\lfloor \dfrac{m}{2^n} \right\rfloor$, q denotes a frequency axis resource number.

q=0, 1, 2,..., or $(2^n-2)$.

If q=0, T(m)[i]= m (Bitwise_XOR)T(0)[i], m > 0, i = 0,1,2,...$2^n$ - 1.

Here, a Bitwise_XOR operation may be defined as follows. When A=a(0)a(1)a(2), ..., a(n-1), B=b(0)b(1)b(2), ..., b(n-1), A Bitwise XOR B=C, and C=c(0)c(1)c(2), ...., c(n-1), c(i)=(a(i)+ b(i)) mod 2.

If q> 0,

T(m)[0]= T(m mod $2^n$)[0], m > 0 , i = 0

T(m)[i] = T(m mod $2^n$)[(i -1 + q) mod ($2^n$ -1) +1], m > 0, i ≥ 1.

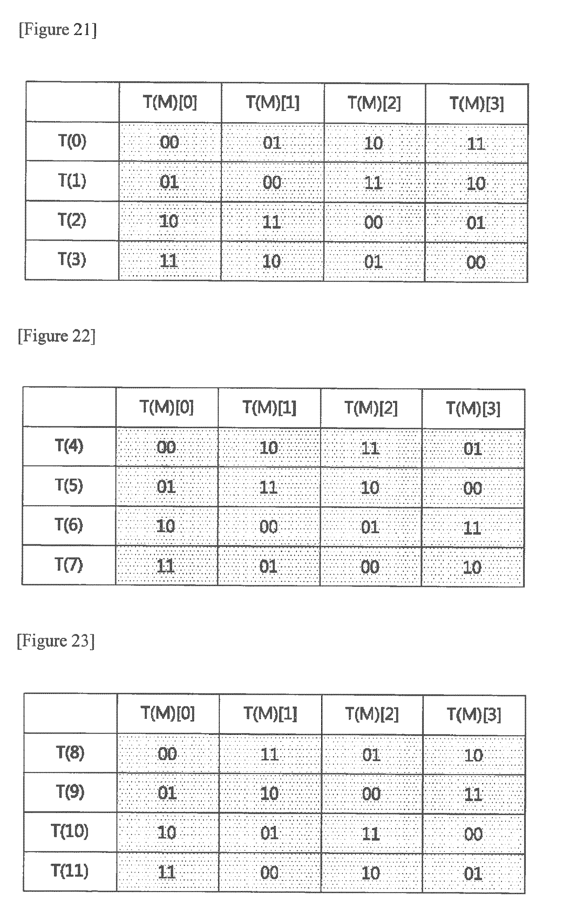

FIG. 21 is a table illustrating a Latin square matrix (q=0) having a size of 4×4, FIG. 22 is a table illustrating a Latin square matrix (q=1) having a size of 4×4, and FIG. 23 is a table illustrating a Latin square matrix (q=2) having a size of 4x4. Referring to FIGS. 21 to 23, a result of generating the Latin square matrix having an order of $2^2$=4 (i.e. 4x4) using the scheme described above can be seen.

Hereinafter, time domain resource mapping of the discovery channels will be described in detail.

The number $N_{DF}$ of discovery frames during $T_{DC\_hop}$ and the number $N_{t\_DC}$ of transmission periods of the discovery channel during the discovery frame may be set to be equal. In other words, $N_{DF} = N_{t\_DC} = L$ may be set.

Here, rows constituting the Latin square matrix having a size of $L×L$ may be set to T(m) (m=0, 1, ..., Lx(L-1)). Each T(m) is a L-dimensional vector. When complexity in obtaining the Latin square matrix is considered, a setting $L = 2^n$ (n is a positive integer) may be used.

When the time axis resource number of the discovery channel is m, the resources on the time axis to be used by the discovery channel may be represented by T(m). $N_{t\_DC}$ discovery channel transmission periods in the discovery frame may be sequentially given an index i=0, 1, 2, 3, ..., ($N_{t\_DC}$ - 1). A T(m)[i] value refers to an discovery channel transmission period index in the discovery frame i. When the discovery resource index is NDC_ID=m in a given discovery hopping process, a position on the time axis of the discovery resources may be determine based on T(m). The discovery channel transmission resource corresponding to the discovery resource index m is a transmission period corresponding to the discovery channel transmission period index T(m)[i] in the discovery frame i.

According to the characteristics of the Latin square matrix, the discovery channel corresponding to one discovery resources index may be transmitted once in each discovery frame.

Further, according to the characteristics of the Latin square matrix, T(m) generated in one same Latin square matrix do not overlap each other in terms of time in the discovery hopping period, and T(m) generated in different Latin square matrixes overlap once in terms of time in the discovery hopping process period.

Such a characteristic allows discovery channels not detected due to the half-duplexing operation of the terminal to be received in other time periods. When the terminal A and the terminal B transmit respective discovery channels in the same transmission period, the two terminals do not receive each other's discovery channel in the transmission period. The terminal A and the terminal B can receive each other's discovery channel in a transmission period in which collision does not occur since the number of times the terminal A and the terminal B transmit the discovery channels in the same transmission period is at most 1 during the discovery hopping process period.

When a very large signal of the adjacent terminal A and a signal of the relatively far terminal B are received in the same time period, the problem of the near-far effect that the signal of terminal B is not correctly received may be overcome. This is because the receiving terminal can receive the signal of the terminal B in different transmission periods in which temporal collision does not occur since the number of times the discovery channel of the terminal A and the discovery channel of the terminal B are generated in the same transmission period is a maximum of 1 during the discovery hopping process period.

Hereinafter, the discovery resource index and the discovery channel mapping will be described in detail.

As described above, resources to be used by the discovery channel in the discovery hopping process may be determined based on a time axis resource number and a frequency axis resource number. When an order of the Latin square matrix used to determine the time axis hopping pattern is L, the time axis resources correspond to rows constituting the Latin square matrix in one-to-one correspondence. Since there are a maximum of $L × (L - 1)$ rows, a maximum of $L × (L - 1)$ discovery channels may be used per one discovery hopping process. When there are a plurality of discovery hopping processes, numbers may be configured for the discovery hopping processes in order to identify the discovery resources.

The discovery hopping process number is denoted NDC_hop_ID. If the discovery resource index in a given discovery hopping process is defined as NDC_ID=0, 1,... or Max_NDC_ID < $L × (L - 1)$, the time axis resource number and the frequency axis resource number may determine as follows.

The time axis resource number m=NDC_ID, and

The frequency axis resource number $q = \left\lfloor \dfrac{N_{DC\_ID}}{L} \right\rfloor$.

Here, the time axis resource number m refers to using the time axis hopping pattern corresponding to T(m) constituting the Latin square matrix having an order of L. As described above, a position in the frequency domain of the D-RBG to be used for transmission may be determined based on the frequency resource number q.

A sequence having a low peak-to-average power ratio (PAPR) may be used to secure a wide coverage. One of sequences of TS 36.211 Table 5.5.1.2-1 which is known technology may be used as a sequence having a length of 12. One of sequences of TS 36.211 Table 5.5.1.2-2 which is known technology may be used as a sequence having a length of 24. One of sequences generated based on a sequence generation method of TS 36.211 that is known technology may be used as a sequence having a length of 36.

The base station may configure a virtual cell ID of one discovery channel for each cell, and a base sequence may be determined based on the configured virtual cell ID of the discovery channel rather than a cell ID. Sequence group hopping and sequence hopping for each cell are not used.

In order to assist discovery channel detection of the terminal, the base station may provide the terminal with virtual cell IDs for discovery channels used in neighboring cells.

For a terminal performing the discovery channel detection and reception, the base station may provide one or a plurality of cyclic shift values among 12 available cyclic shift values to the terminal through the SIB. The base station may a designate an DM RS cyclic shift value that can be used by the terminal for transmitting the discovery channel.

The terminal receiving the discovery channel may perform search and measurement of the discovery channel in consideration of virtual cell ID information for discovery channels of a serving cell and a neighboring cell and available cyclic shift values. In other words, when the terminal detects the DM RS in the discovery channel search process, the terminal should target all the DM RS sequences corresponding to the cyclic shift values determined by a base station configuration.

Bit-level scrambling may be applied. A scrambling sequence generator may be initialized as shown in Equation 47 below.

$$[\text{Equation 47}]$$

$$c_{\text{init}} = n_{\text{DMRS},0}^{(2)} \cdot 2^9 + V_{ID}^{PDCH}$$

Here, $V_{ID}^{PDCH}$ denotes the virtual cell ID for a cell-specific discovery channel, and $n_{\text{DMRS},0}^{(2)}$ denotes a value that the base station configures for the terminal among the available DM RS cyclic shift values. The receiving terminal may assume the bit-level scrambling based on the detected DM RS base sequences and cyclic shift values to decode the discovery channel.

Since the DM RS sequence and the data of the discovery channel have a one-to-one correspondence relationship when the bit-level scrambling as described above is applied, decoding is successfully performed only when the DM RS sequence and the discovery channel are transmitted to the same terminal. In other words, when the terminal receiving the discovery channel performs decoding using any detected DM RS sequence, the possibility that decoding of a discovery channel of an unintended terminal (a terminal which has not transmitted the DM RS sequence) is determined to have been successfully performed can be minimized.

A scheme that does not exactly the same bit-level scrambling as described above may be used only if the scheme uses different bit-level scrambling sequences in bit-level scrambling for different discovery channels so that the discovery channel and the data can have a one-to-one correspondence relationship.

Hereinafter, channel coding for the discovery channel will be described in detail. A channel coding structure of the discovery channel is as follows.

In scheme 1, the discovery channel includes at least two codewords. In other words, the discovery channel may include a primary block and a secondary block. Alternatively, the discovery channel may include a primary block, a secondary block, and an expansion block. Each block may constitute one independent codeword and may be self-decodable.

Scheme 1 may be advantageous to demodulation and decoding of the terminal in comparison with a case in which one discovery channel includes one codeword. When a service category is a desired service category as a result of decoding the primary block, the terminal may decode the secondary block and may also decode the expansion block, if necessary. When a service category is not a desired service category as a result of first decoding the primary block, the terminal may not decode the secondary block and the expansion block.

The primary block may include service category information. Block coding may be applied to the primary block, or convolutional coding may be applied after cyclic redundancy check (CRC) bits are included. The secondary block may include content of the service and may indicate whether there is the expansion block or not. Block coding may be applied to the secondary block or convolutional coding may be applied after CRC bits are included. The expansion block may include more detailed service content. After CRC bits are included in the expansion block, convolutional coding or turbo coding may be applied to the expansion block. For the expansion block, a physical uplink shared channel (PUSCH) rather than the discovery channel may be used.

In scheme 2, the discovery channel may include one codeword. Block coding may be applied to one codeword or convolutional coding or turbo coding may be applied after CRC bits are included.

In both of scheme 1 and scheme 2 described above, the terminal may determine whether decoding has been successful after having performed the decoding. For this, when coding is not block coding, a certain bit number of CRC bits may be acquired through CRC coding of an information bitstream, and a bitstream obtained by adding the CRC bits to the information bitstream may be provided as an input of a channel encoder. Accordingly, the codeword can be acquired from the channel encodrer.

Hereinafter, an example of discovery channel design will be described in detail.

As shown in FIG. 10 described above, one D-RBG occupies $N_{f\_Symb}$ subcarriers on the frequency axis and the (Nt_symb+1) SC-FDMA symbols on the time axis. One of them may be used for the DM RS. Accordingly, the number S of modulation symbols which can be be transmitted by one D-RBG is equal to $N_{t\_symb} \times N_{f\_symb}$.

When a size of the information bit of the discovery channel is K and a code rate is R, a bit size of the codeword is Nc=K/R bits. When a modulation order is QPSK, the number M of necessary modulation symbols is equal to Nc/2= K/(2×R).

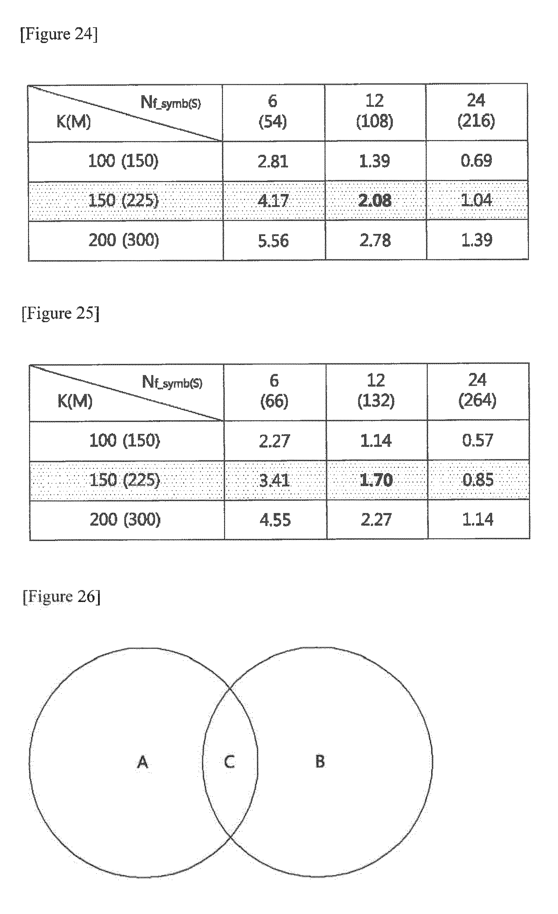

As shown in FIG. 6 described above, when the SC-FDMA symbol and the extended CP are used, the number S of modulation symbols which can be transmitted using two D-RBGs in one discovery subframe is equal to $9 \times N_{f\_symb}$. The number of subframes necessary according to K and $N_{f\_symb}$ to achieve R=1/3 is as shown in the table of FIG. 24. FIG. 24 is a table illustrating the number of necessary subframes in the case of an extended CP.

When K=150 and $N_{f-symb=}12$, one discovery channel may be mapped to two subframes (which corresponds to R=0.28). For example, when 2×64=128 subframes are used as one frame on the time axis, 64 discovery channels may be accommodated per one RB. A temporal length of the discovery frame corresponds to 128×8=1024 ms. A discovery hopping process period is 1024×64=65536 ms.

As in FIG. 5 described above, when the SC-FDMA symbol and the normal CP are used, the number S of modulation symbols which can be transmitted by one discovery subframe is equal to $11 \times N_{f\_symb}$. The number of subframes necessary according to K and $N_{f\_symb}$ to achieve R=1/3 is as shown in the table of FIG. 25. FIG. 25 is a table illustrating the number of necessary subframes in the case of the normal CP.

Hereinafter, discovery resources and DM RS sequence allocation will be described in detail.

FIG. 26 is a conceptual diagram illustrating detection areas for discovery channels which use the same discovery resources.

Referring to FIG. 26, a terminal A and a terminal B may simultaneously transmit discovery channels occupying the same frequency-time resources. Since the terminal B is located outside a discovery channel detection area of the terminal A, the terminal B does not detect a discovery channel transmitted by the terminal A or detects it as a very low power discovery channel. Accordingly, the terminal B may be allocated (or may select its own discovery channel) a discovery channel and transmits the allocated discovery channel. On the other hand, a terminal C is in a position at which both of the discovery channels transmitted by the terminal A and the terminal B arrive.

When DM RS sequences of the discovery channels of the terminal A and the terminal B are assumed to be the same, the terminal C performs channel estimation using as DM RS a signal received as a sum of the DM RSs which are simultaneously transmitted by the terminal A and the terminal B. Only the DM RS transmitted by the terminal A (terminal B) should be used to decode the discovery channel of the terminal A (terminal B). However, when the channel is estimated using the signal formed by the addition of the two DM RS transmitted by the terminal A and the terminal B, the channel estimation may not be successfully performed and thus decoding performance may be degraded.

One method of solving this problem is to configure different DM RS sequences to be transmitted by the terminal A and the terminal B. If a base station participates in allocation of the discovery channels and allocates different DM RS sequences to the same discovery channels, it may mitigate the area overlapping problem.

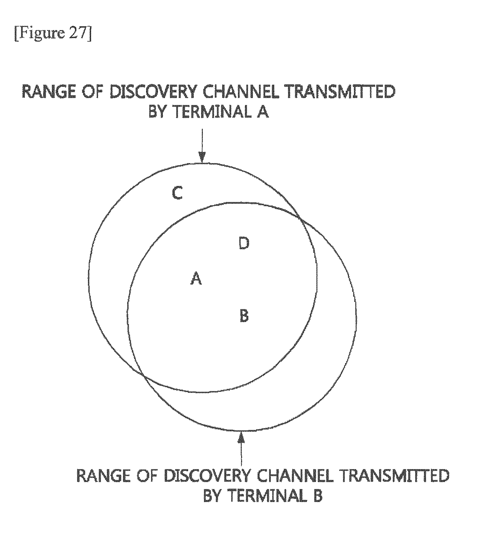

FIG. 27 is a conceptual diagram illustrating an example in which adjacent terminals use the same discovery channel.

Referring to FIG. 27, adjacent terminals A and B may simultaneously transmit the discovery channels which use the same frequency-time resources. The terminal A and the terminal B are located in each other's discovery channel detection areas, but the two terminals do not detect each other's discovery channels since the two terminals use the same discovery channels. This situation may occur when the two terminals located in the detection area simultaneously perform transmission or may occur when the terminals are located in each other's discovery channel detection areas due to a movement of the terminal after allocation is performed outside the detection area.

As described above, when the terminal A and the terminal B use the same DM RS sequence and the terminal D decodes broadcasting information of the discovery channel related to the DM RS, channel estimation is not successfully performed due to the DM RS overlapping problem and decoding performance of the broadcasting channel is degraded. One method of solving this problem is a method used to mitigate the DM RS overlapping problem above, namely, a method of configuring the DM RS sequences transmitted by the terminal A and the terminal B to be different.

Meanwhile, when the terminal A and the terminal B belong to the same base station, the base station can allocate different discovery resources to the two terminals to prevent generation of the overlapping problem.

When the terminal A and the terminal B belong to cells of different base stations, immediate cooperation between the base stations may be difficult. In this case, the performance degradation caused by the DM RS overlapping can be mitigated by configuring the DM RS sequences used in the two cells to be different. In other words, when the terminal D performs the detection, the performance degradation caused by the DM RS overlapping can be mitigated. However, when the adjacent terminals A and B transmit the same discovery channels, the terminals A and B do not detect each other's discovery channels. This problem is not still solved.

The terminal may determine discovery resources to be used for transmission through search and measurement for discovery resources. When the terminal desires to transmit the discovery channel, the terminal may search for discovery resources for a certain period of time to select the discovery resource which is determined to be empty or have a lowest signal and transmit the discovery channel through the selected discovery resources. In this case, the terminal may transmit the DM RS sequence whose use is allowed indicated by the base station in advance or may select one of the sequences to generate and transmit the DM RS sequence.

In a method for autonomous selection in the terminal, it is necessary for the terminal to notify the base station of the discovery resource to be transmitted by the terminal. The base station may schedule the terminal based on subframe information used by the terminal for discovery channel transmission. For example, the base station may schedule in such a manner that cellular communication does not occur in the subframe in which the discovery channel is transmitted.

The base station may determine discovery resources to be used by the terminal based on a report of the terminal. When the terminal transmits the discovery channel, the terminal may perform measurement on discovery resources in a certain discovery resource index range during a certain period of time, select one or a plurality of indexes of the discovery resources having the smallest size of reception power through measurement, and report the selected index (or indexes) of the discovery resources to the base station. Additionally, the terminal may report the reception power of the selected discovery channel to the base station.

The base station may allocate discovery resources and a DM RS sequence to be used by the terminal to the terminal based on a measurement result of the terminal. The DM RS sequence may be defined by a base sequence index and a cyclic shift index. In other words, the base station may allocate, to the terminal, the DM RS base sequence index and the cyclic shift index together with the discovery resources to be used by the terminal.

When the terminal A and the terminal B belong to the same cell, the base station may allocate orthogonal discovery channel resources to the two terminals in order to solve the problem of wrong channel estimation caused by the area overlapping.

When the same discovery resources are allocated to a plurality of terminals, the base station can allocate different DM RS sequences (e.g., the same base sequence but different cyclic shifts) to the terminals to decrease problems associated with DM RS overlapping.

On the other hand, when the terminal A and the terminal B belong to cells managed by different base stations, immediate cooperation between the base stations is difficult. Accordingly, if different DM RS sequences are configured in advance to be used in two cells, it is possible to mitigate degradation of reception performance (i.e. performance degradation due to DM RS overlapping) of terminals located in the discovery channel overlap area.

The base station may transfer DM RS sequence information necessary to receive the discovery channel to the terminal using the SIB. The DM RS sequence information may include information for determining the base sequence and the cyclic shift available to the discovery channel DM RS. The terminal may detect the discovery channel based on the DM RS sequence information.

Advantages of allocation of the discovery channel and the DM RS sequence by the base station are as follows. The allocation can be performed so that adjacent terminals in the cell do not use the same discovery channel at the same time. When a discovery channel already used for transmission by one terminal is also allocated to another terminal, the problem of the decoding performance degradation due to DM RS overlapping can be reduced by allocating different DM RS cyclic shifts between terminals. Since the base station knows the allocation information of the discovery channels used by terminals, the base station may schedule terminals based on the information of subframes used for discovery channel transmission. For example, the base station may schedule so that cellular communication does not occur in the subframe in which the discovery channel is transmitted.

Each cell may configure the number of sequences which can be used by terminals belonging to the cell to one or plural. Each cell may notify terminals belonging to the cell of one or a plurality of sequences available for discovery channel transmission.

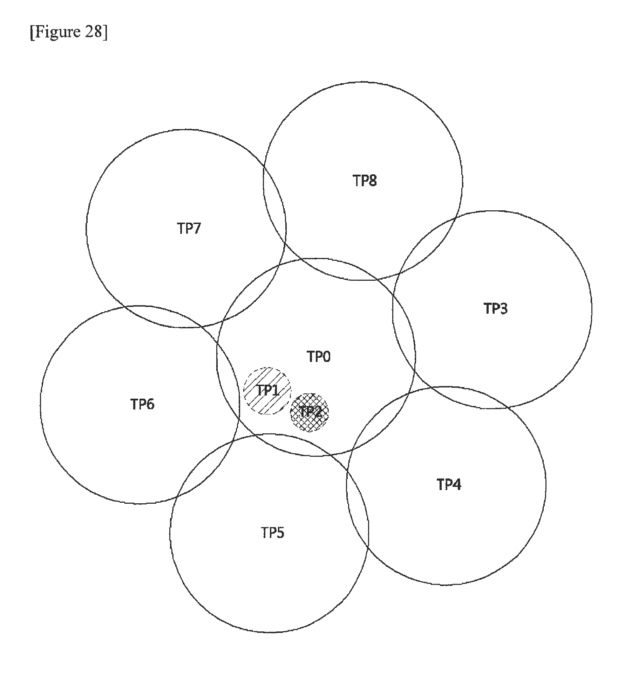

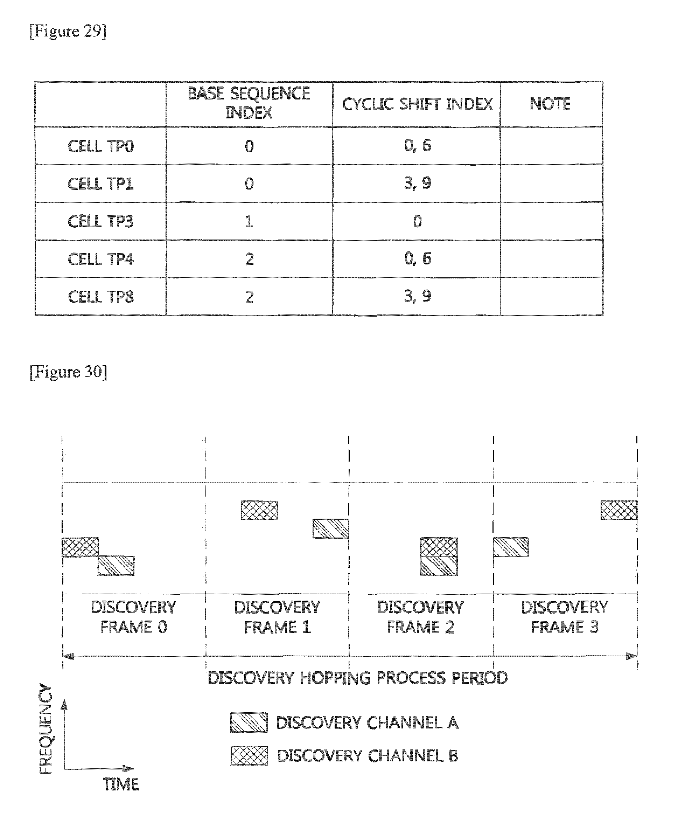

FIG. 28 is a conceptual diagram illustrating an embodiment of a cell arrangement, and FIG. 29 is a table illustrating an example of allocation of a DM RS sequence to each cell.

Referring to FIGS. 28 and 29, different cells are allowed to use different DM RS sequences. Each cell may configure the number of sequences which can be used by terminals belonging to the cell to one or plural and may notify the terminals belonging to the cell of the number of sequences configured. Generally, the base station may inform the terminals of DM RS sequence information used in nearby TP1,..., TP8 as well as TP0, so that a terminal belonging to TP0 can receive the discovery channels.

Hereinafter, methods of overcoming an issue of non-detection of the discovery channel due to collision will be described in detail.

When adjacent terminals belonging to different base stations transmit the same discovery channel, the issue of the collision may occur. One method of overcoming the issue of the collision is allocation of different time periods as reception time periods for different cells so that a discovery channel transmitted by a neighboring cell can be received.

When terminals receive the discovery channels, ambiguity of transmission should not occur. For example, when a terminal does not perform the discovery channel transmission in an arbitrary time period that is decided by the terminal, the receiving terminal cannot exactly know whether the discovery channel is transmitted for a given time period, and in this case, reception performance may not be improved even when chase combining is performed. Therefore, it is desirable for the receiving terminal to know the time period in which a counterpart terminal does not perform transmission.

In method 1, a "forced no transmission period" is configured for each cell, and the terminals belonging to the cell do not perform discovery channel transmission in a reception compulsion period. A terminal in scan-only or scan-broadcast state may receive discovery channels transmitted by terminals belonging to another cell in the "forced no transmission period." Neighboring cells may use the "forced no transmission periods" which do not overlap in time. For example, when a specific discovery frame period is configured as a "forced no transmission period" for each cell, terminals may receive discovery channels transmitted by terminals belonging to other cells. Particularly, terminals transmitting the discovery channels, i.e., terminals in broadcast-only or scan-broadcast state can detect, during the "forced no transmission period", the discovery channels transmitted by other terminals which belonging to other cells (i.e., adjacent terminals) and use the same channel as their own discovery channel.

A scheme of configuring different non-transmission periods between cells in units of a certain time period (e.g., a discovery frame) has the following disadvantage. Since all terminals belonging to the same cell do not perform transmission in a specific discovery frame, a terminal cannot receive desired discovery channels transmitted by other terminals in the same cell in the corresponding discovery frame. Accordingly, there is a problem that the time required for detection varies depending on a time point at which discovery channel reception starts.

Further, when a terminal in scan-broadcast state receives a discovery channel, some discovery channels may not be received at most two times in the discovery hopping process period. For example, in FIG. 30, since a discovery channel A and a discovery channel B occupy the same time period in discovery frame 2, a transmitting terminal A and a transmitting terminal B do not receive each other's channel in discovery frame 2. If one of discovery frames 0, 1 and 2 is allocated as the "forced no transmission period," the terminal does not receive a counterpart discovery channel during two discovery frames in the discovery hopping process period. FIG. 30 is a conceptual diagram illustrating an embodiment of discovery channel hopping and temporal collision.

In method 2, a "forced no transmission period" may be configured by using a Latin square matrix. One or a plurality of no transmission time-axis hopping patterns are configured for each cell and neighboring cells use no transmission time-axis hopping patterns which do not overlap in terms of time. All terminals in the same cell do not perform transmission in a time period corresponding to the no transmission time-axis hopping pattern of the cell.

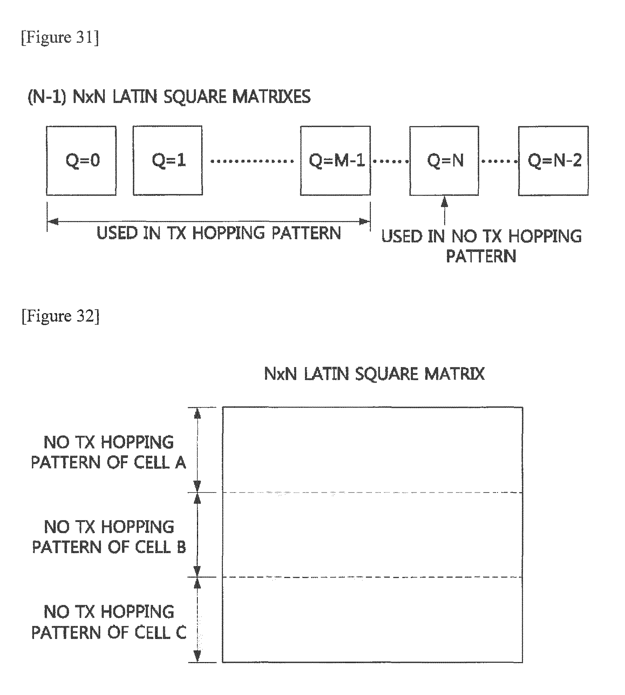

FIG. 31 is a conceptual diagram illustrating an embodiment of use of a Latin square matrix-based No Tx hopping pattern.

Referring to FIG. 31, when a base station selects a no transmission time axis hopping pattern (No Tx hopping pattern), the base station may select a pattern belonging to a Latin square matrix that is different from time axis hopping patterns (Tx hopping patterns) used for transmission by terminals in the cell. Accordingly, the No Tx hopping pattern collides once with one randomly selected Tx hopping pattern in one discovery channel transmission period within the discovery hopping process period.

A terminal which is performing discovery transmission may receive a discovery channel of other cells instead of performing discovery transmission in a discovery channel transmission period in which its own Tx hopping pattern and a No Tx hopping pattern of the cell collide. Therefore, when other terminals use discovery channels with the same Tx hopping pattern as the one used by the terminal, the terminal can detect these discovery channels.

FIG. 32 is a conceptual diagram illustrating an example of division and use of Latin square-based time axis No Tx hopping patterns among cells.

Referring to FIG. 32, when No Tx hopping patterns are selected, neighboring cells share different patterns belonging to the same Latin square matrix. In this case, since the No Tx hopping patterns of the neighboring cells do not overlap in terms of time, terminals can detect terminals of the neighboring cells which use the same channel.

The following is an example in which time axis Tx and No Tx hopping patterns are used based on a Latin square matrix.

In the tables shown in FIGS. 21 and 22 described above, T(0), T(1), ..., T(7) of the Latin square matrix in which q=0 and q=1 are assumed to be used as Tx hopping patterns for all cells. Further, in the table shown in FIG 23 described above, T(8) of the Latin square matrix in which q=2 is used as the No Tx hopping pattern for the cell A, T(9) is used as the No Tx hopping pattern for the cell B, and T(10) is used as the No Tx hopping pattern for the cell C.

For example, when the terminal A belonging to the cell A transmits a discovery channel using T(2) as the Tx hopping pattern and the No Tx hopping pattern is not configured for the cell A, the terminal A may perform transmission in the discovery channel transmission time period corresponding to the T(2)[i] value in the discovery frame i. However, when the No Tx hopping pattern for the cell A is configured as T(8) and the T(8)[i] value and the T(2)[i] value are equal, the terminal A may not perform transmission in a time period corresponding to the T(2)[i] value. In the above example, since T(9)[2]=T(2)[2]=00, the terminal A may not transmit the discovery channel in time period 0 of discovery frame 2. Further, the No Tx hopping patterns of the cell A, the cell B, and the cell C do not overlap in the same time period. Accordingly, when the terminal B belonging to the cell B uses the same Tx hopping pattern as the terminal A and the terminal A is located in a discovery channel range of the terminal B, the terminal A can detect the discovery channel of the terminal B in time period 0 of discovery frame 2.

Generally, when the terminal A uses one of T(0), T(1),..., T(7) as the Tx hopping pattern, the hopping Tx pattern may overlap the No Tx hopping pattern in one time period during the discovery hopping period. When the reception is performed in such a time period, the terminal A can detect an adjacent terminal in the other cell which uses the same Tx hopping pattern.

The base station may broadcast No Tx hopping pattern information configured for each cell through the SIB, and the terminals may acquire the No Tx hopping pattern information configured for each cell transmitted from the base station. Therefore, the terminal can perform reception in the time period corresponding to the No Tx hopping pattern and accordingly detect the discovery channels transmitted by terminals belonging to neighboring cells.

Each cell may allocate a plurality of No Tx hopping patterns, and when a number N of No Tx hopping patterns are allocated to each cell, the terminal may perform search on a maximum of N consecutive discovery frames in order to detect all discovery channels which can be transmitted.

Furthermore, the base station may provide the No Tx hopping pattern information of the neighboring cells to the terminal through the SIB, and the terminals may perform reception and decoding based on the No Tx hopping pattern information of the neighboring cells.

A terminal in broadcast-only or scan-broadcast state (i.e., a terminal which periodically performs the discovery transmission) may detect the same channel as the discovery channel transmitted by the own terminal in the forced no transmission period, and in this case, may provide the detected channel information to the base station. The base station may allocate, to the terminal, another discovery channel which does not collide with the channel received by the terminal, and the terminal may use the discovery channel allocated by the base station.

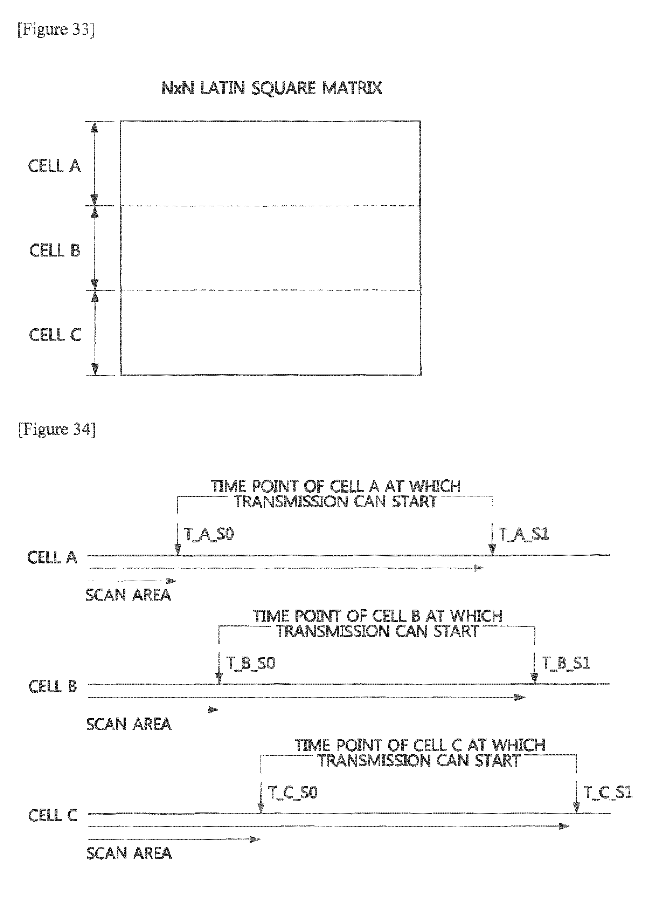

In method 3, time axis hopping patterns used in the cells are allocated for each cell, and neighboring cells use different time axis hopping patterns, if possible. In the case of discovery channels using the same frequency resource, that is, N time axis hopping patterns belonging to the same Latin square matrix having an order of N may be divided and used among cells. For example, neighboring cells A, B and C as in FIG. 33 may divide and use N time axis hopping patterns belonging to the same Latin square matrix among cells. FIG. 33 is a conceptual diagram illustrating an example of division and use of Latin square-based time axis Tx hopping patterns among the cells.

Since this method prohibits terminals belonging to different cells from transmitting the same discovery channel, at least an issue of a collision due to selection of the same discovery channel does not occur between the cells. However, there is a disadvantage in that resource use efficiency decreases since the discovery resources are divided and used between neighboring cells.

In method 4, a transmission start time point (a channel use start time point) may be sequentially configured for each cell. The terminal may scan the discovery channels right before the transmission start time point of the cell that the terminal belongs to.

In this scheme, neighboring cells may use different transmission start time points, as in FIG. 34. FIG. 34 is a conceptual diagram illustrating an example of different transmission start time points among cells and a transmission after scanning. The terminal may scan discovery channels before the transmission start time point allowed for its cell, and transmission start time points of neighboring cells may be located in this scan time period. Therefore, since the terminal can detect a case in which an adjacent terminal in a neighboring cell first occupies and uses the discovery channel, the terminal may not select the channel used by the adjacent terminal. Through such a method, the terminal can avoid the collision with the adjacent terminal.

In order to avoid the problem of the collision occurring by adjacent terminals in the same cell transmitting the same discovery channel, the base station may allocate different discovery resources to the adjacent terminals in the cell managed by the base station. In this case, since the terminals use different channels, a case in which another terminal adjacent due to a movement of the terminal transmits the same discovery channel does not occur.

In another method, when the base station allocates the same discovery resources to terminals in the cell managed by the base station, the base station may also configure some of transmission time periods of the terminal as compulsion reception time periods. When the base station configures the compulsion reception time periods, the base station may allocate the compulsion reception time periods not to overlap each other between terminals which use the same discovery resources in the cell, and accordingly, the terminals can receive discovery channels of the other terminals.

In its own compulsion reception period, instead of transmitting a discovery channel, the terminal may detect whether other adjacent terminals use the same channel, receive the channel, and perform decoding. Here, the compulsion reception period may refer to the "No Tx hopping pattern" based on the Latin square matrix described above. In this case, "No Tx hopping patterns" which do not overlap each other in time may be allocated to the terminals which use the same discovery channel so that the terminals can efficiently check transmission of other terminals.

Hereinafter, a process of transmitting or receiving a discovery channel will be described in detail.

When discovery channel transmission is determined using an uplink reception timing, a terminal should acquire uplink time synchronization for reception of the discovery channel. The terminal may receive a TA command from the base station and estimate the discovery channel reception timing.

Transmission power $P_{DC,c}(i)$ of the discovery channel in a serving cell c of the terminal and a subframe i conforms to a transmission power value $P_{DC}$ set by the base station and may be set not to exceed $P_{CMAX},c(i)$.

[Equation 48]

$$P_{DC,c}(i) = \min(P_{DC}, P_{CMAX,c}(i))$$

When the terminal receives the discovery channel once and fails in decoding, the terminal may perform one or more additional receptions and attempt the decoding again by combining reception results (e.g., chase combining). In such a case, in order to efficiently combine a plurality of receptions, the receiving terminal may be able to regard the same transmitting terminal transmits the same content through the discovery channel within a certain time interval.

Therefore, it is desirable to limit the transmission start time point of a new discovery channel to certain discovery subframes. The transmission start time points may be determined based on pre-determined specifications or may be determined based on a configuration of the base station. The base station may provide time points at which the discovery channel transmission can start to the terminal through the SIB or the like.

If there are $N_{t\_DC}$ discovery frames in the discovery hopping process period, the base station may allocate discovery frames in which new transmissions can start at intervals of L discovery frames. Denoting the discovery frame index in the discovery hopping process period as i (i=0, ..., $N_{t\_DC}$-1), a new transmission can start only in discovery frames satisfying Equation 49 below

[Equation 49]

$$(i \bmod L) = k$$

This means that restriction is imposed so that transmission of a discovery channel including different contents can start only in discovery frames Lxj + k (j=0, 1, 2, ....). Accordingly, a receiving terminal may regard the discovery channel as being repeatedly transmitted a maximum of L times in L discovery frames, including a start discovery frame. Therefore, the receiving terminal may receive the repeatedly transmitted discovery channel a maximum of L times and perform decoding.

For example, $N_{t\_DC}$=64 and L=4; the same channel may be transmitted at least four times, and a new transmission may occur every four discovery frames. Accordingly, there may be sixteen new transmission opportunities in the discovery hopping process period.

The discovery channel transmission period may be set for each terminal in consideration of terminal power supply situation and a type of service. The discovery channel transmission period may be set in units of discovery hopping process periods as follows.

When one discovery hopping process is formed using the subframes corresponding to the respective elements of the set $\Delta_{DSC}$ as in discovery hopping process allocation scheme 2, the start subframe of the hopping process may be transmitted only in the hopping process period satisfying the following conditions.

When the discovery hopping process allocated to the terminal corresponds to a set $\Delta_{DSC}$ offset value J, Equation 50 below may be obtained.

[Equation 50]

$$(10 \cdot 2^{10} \cdot n_{sf} + 10 \cdot n_r + k_{DC} - T_{DC\_hop\_offset} - T^{UE}_{DC\_hop\_offset} - J) \bmod T^{UE}_{DC\_hop} = 0$$

Here, $T^{UE}_{DC\_hop} = n \cdot T_{DC\_hop}$ (n is an integer greater than 0) denotes a transmission period, and $T^{UE}_{DC\_hop\_offset} = m \cdot T_{DC\_hop}$ (m is an integer smaller than n) denotes an offset. The transmission period and the offset may be set by the base station.

However, in the scheme of setting the discovery channel transmission period for each terminal, terminals receiving the discovery channels should be notified of the transmission period and the offset of the discovery channels currently used for transmission, such that the reception is facilitated. In order to reduce a signaling overhead and prevent an increase in reception complexity, one or a plurality of terminal groups may be formed or all terminals belonging to a specific terminal group among the terminal groups may also use the same discovery channel transmission period and offset setting scheme. In this case, the base station has only to notify the terminals of only the transmission period and offset information of each terminal group.

A discovery channel search process is as follows. A terminal may first search for a DM RS, and attempt to decode a discovery channel associated with the DM RS when signal strength of the DM RS is higher than a previously set threshold. When the decoding is not successful, the terminal may receive the discovery channel in a next repeated period again, and combine the signal received again with the previously received signals to attempt the decoding again.

When the terminal is in scan-only state, the terminal may perform the discovery channel search during a period of time corresponding to a minimum discovery frame. In this case, the terminal may perform the discovery channel search on several discovery frame units in consideration of a case in which the reception fails due to the near-far effect.

When the terminal is in scan-broadcast state, the terminal may perform the discovery channel search during a period of time corresponding to at least one discovery frame or two discovery frames according to the maximum number of allocated discovery channels. In this case, the terminal may perform the discovery channel search on more discovery frame units in consideration of a case in which the reception fails due to the half-duplexing and the near-far effect. Particularly, since the near-far effect may frequently occur in a dense region where a number of discovery channels are detected, the terminal may search for a sufficient number of discovery frames in consideration of such a situation.

The terminal may first search for the DM RS, and attempt to decode a discovery channel associated with the DM RS when signal strength of the DM RS is higher than a previously set threshold. When the decoding is not successful, the terminal may receive the discovery channel in a next repeated section again and combine the signal received again with the previously received signal to attempt the decoding again.

When the terminal is in scan-only state, the terminal may perform the discovery channel search during a period of time corresponding to the discovery frame. In this case, the terminal may perform the discovery channel search on several discovery frames units in consideration of a case in which the reception fails due to the near-far effect.

When the terminal is in scan-broadcast state, the terminal may receive all discovery channels in one discovery frame when the number of discovery resources which can be allocated to a given discovery hopping process is equal to or less than L. Here, L denotes an order of the Latin square matrix. On the other hand, when the number of discovery resources exceeds L, the terminal may receive all discovery channels during a period of time corresponding to two discovery frames, but the terminal is required to perform the discovery channel search on more discovery frame units in consideration of a case in which the reception fails due to the near-far effect. Particularly, since the near-far effect may frequently occur in a dense region where a number of discovery channels are detected, the terminal may search for a sufficient number of discovery frames in consideration of such a situation.

The discovery channel search and reception performed by the terminal may be classified in the following forms. In other words, the discovery channel search and reception may be classified into search and reception for blind discovery, and assisted discovery and reception.

A terminal performing the blind discovery may perform the discovery channel search and reception based on only information for a discovery resource range for blind discovery. The base station may transmit SIB including the discovery resource range for blind discovery.

A terminal performing the assisted discovery may perform the discovery channel search and reception on specific discovery resources that are designated by the base station. For the assisted discovery, the base station may inform the terminal of a discovery hopping process number and resource indexes for which the search and the reception are to be performed, and DM RS sequence information.

Types of discovery channel measurement include discovery channel received signal strength indicator (DC-RSSI) and discovery channel reference signal received power (DC-RSRP).

The DC-RSSI may refer to reception power per resource element including contributions from all sources including a serving cell, a non-serving cell, an adjacent channel interference, or thermal noise, which is measured on the DM RS resource elements of the discovery channel corresponding to discovery resources (the discovery hopping process number and the discovery resource index) designated by the base station.

The DC-RSRP may refer to reception power per resource element of the discovery channel DM RS corresponding to the discovery resources (the discovery hopping process number and the discovery resource index) and the DM RS sequence designated by the base station.

The base station may instruct the terminal to perform the discovery channel search and measurement in order to assist the terminal in selecting resources to be used for discovery channel transmission. The terminal may perform DC-RSSI measurement on the discovery channel belonging to the discovery resource range designated by the base station. After having performed the DC-RSSI measurement, the terminal may report the discovery hopping process number and the resource index of $N_{low}^{PDCH\_RSSI}$ discovery resources providing lowest DC-RSSI values to the base station or may report a DC-RSSI measurement result together with the discovery hopping process number and the resource index to the base station. The base station may determine the discovery resources to be used for the terminal to transmit the discovery channel based on a search and measurement result of the terminal.

The terminal may perform DC-RSRP measurement on a specific discovery resource and DM RS sequence indicated by the base station. The base station may inform the terminal of the discovery resources and DM RS sequence information for which measurement is to be performed. The terminal may perform the DC-RSRP measurement corresponding to each discovery resource and DM RS sequence and report a result to the base station.

The discovery resources to be measured may be designated as resources used for the terminal to transmit the discovery channel. In this case, the terminal may perform measurement in a No Tx period. The base station may use a result of the measurement, for device to device communication, interference control or the like. When another type of measurement is necessary, it may be defined in a higher layer standard.

The DC-RSRP is defined as a linear average of the power contributions (in [W]), from a DM RS sequence, over resource elements that carry the discovery channel DM RS. The terminal performs the DC-RSRP measurement for discovery channel resources, and the discovery channel resources refer to discovery channel DM RS resource elements corresponding to the discovery resource index and the discovery hopping process number configured by higher layers. The DM RS sequence which is a target for which the terminal measures DC-RSRP is configured in the terminal by higher layers. A reference point for DC-RSRP should be an antenna connector for the terminal.

The DC-RSSI is defined as a linear average of the total received powers (in [W]) over resource elements that carry the discovery channel DM RS from all sources including a serving cell, a non-serving cell, an adjacent channel interference, thermal noise or the like. The terminal performs DC-RSSI measurement for discovery channel resources, and the discovery channel resources refer to discovery channel DM RS resource elements corresponding to the discovery hopping process number and the discovery resource index configured by the higher layers. A reference point for DC-RSSI should be an antenna connector for the terminal.

Although the invention has been described with reference to the embodiments, it will be understand by those skilled in the art that the present invention may be variously modified and changed without departing from the spirit and scope of the present invention defined in claims below.

**Claims**

**1.** A discovery method for device to device communication performed in a terminal, the method comprising:

  performing transmission in a first subframe;
  transmitting a discovery channel through a previously set period in a second subframe located next to the first subframe; and
  performing transmission in a third subframe located next to the second subframe.

**2.** The method according to claim 1, wherein:

  the previously set period is a period other than a first symbol and last one symbol in the second subframe.

3. The method according to claim 1, wherein:

   the previously set period is a period other than a first symbol and last two symbols in the second subframe.

4. The method according to claim 1, wherein:

   the previously set period is a period other than last one symbol in the second subframe.

5. The method according to claim 1, wherein:

   the previously set period is a period from a first time point obtained by adding a reception start time of the second subframe of a partner terminal to a transmission/reception switching time to a second time point obtained by subtracting a round trip delay time and the transmission/reception switching time from a reception start time of the third subframe of the partner terminal.

6. The method according to claim 1, wherein:

   the previously set period is a period from a first time point obtained by adding a reception start time of the second subframe of a partner terminal to a transmission/reception switching time to a second time point obtained by subtracting a round trip delay time, the transmission/reception switching time and a sounding reference signal transmission time from a reception start time of the third subframe of the partner terminal.

7. The method according to claim 1, wherein:

   the previously set period is a period from a first time point which is a reception start time of the second subframe of a partner terminal to a second time point obtained by subtracting a round trip delay time from a reception start time of the third subframe of the partner terminal.

8. The method according to claim 1, wherein:

   the previously set period is a period from a first time point which is a reception start time of the second subframe of a partner terminal to a second time point obtained by subtracting a round trip delay time and a sounding reference signal transmission time from a reception start time of the third subframe of the partner terminal.

9. The method according to claim 1, wherein:

   the previously set period is a period set based on a discovery channel transmission time point received from a base station.

10. The method according to claim 1, wherein:

   a cyclic prefix of the second subframe is set to a normal cyclic prefix or an extended cyclic prefix based on a size of a discovery channel range.

11. The method according to claim 1, wherein:

   the first subframe, the second subframe and the third subframe are uplink subframes for cellular communication.

12. The method according to claim 1, wherein:

   the discovery channel includes a demodulation reference signal (DM RS) and a broadcasting channel.

13. The method according to claim 1, wherein:

   the second subframe includes resources for discovery and resources for cellular communication located in different frequency bands.

14. The method according to claim 13, wherein:

the second subframe further includes a guard band which separates the resources for discovery and the resources for cellular communication on a frequency axis.

**15.** The method according to claim 1, wherein:

in the second subframe, the resources for discovery adjacent on a frequency axis in any slot are located to be spaced on the frequency axis in a slot next to the any slot.

**16.** The method according to claim 1, wherein:

the discovery channel is mapped on a time axis of the second subframe based on a Latin square matrix.

**17.** The method according to claim 1, wherein:

the discovery channel is mapped on a frequency axis of the second subframe based on a Latin square matrix.

**18.** A discovery method for device to device communication performed in a terminal, the method comprising:

receiving a first subframe;
transmitting a discovery channel through a previously set period in a second subframe located next to the first subframe; and
receiving a third subframe located next to the second subframe.

**19.** The method according to claim 18, wherein:

the previously set period is a symbol other than a symbol occupied by a control channel and a symbol used for transmission/reception switching in the second subframe.

**20.** The method according to claim 18, wherein:

the first subframe, the second subframe and the third subframe are downlink subframes for cellular communication.

[Figure 1]

| TERMINAL STATE | SCAN | BROADCAST | NOTE |
|---|---|---|---|
| D-IDLE | X | X | |
| SCAN-ONLY | O | X | |
| BROADCAST-ONLY | X | O | |
| SCAN-BROADCAST | O | O | |

[Figure 2]

[Figure 3]

[Figure 4]

FIRST SLOT (0.5MS) | SECOND SLOT (0.5MS)

#0 #1 #2 #3 #4 #5 #0 #1 #2 #3 #4 #5

FREQUENCY

TIME

SC-FDMA SYMBOL AVAILABLE FOR DISCOVERY CHANNEL TRANSMISSION

[Figure 5]

FIRST SLOT (0.5MS) | SECOND SLOT (0.5MS)

#0 #1 #2 #3 #4 #5 #6 #0 #1 #2 #3 #4 #5 #6

FREQUENCY

TIME

SC-FDMA SYMBOL AVAILABLE FOR PDCH TRANSMISSION

[Figure 6]

FIRST SLOT (0.5MS)  SECOND SLOT (0.5MS)

#0 #1 #2 #3 #4 #5 #0 #1 #2 #3 #4 #5

FREQUENCY

TIME

SC-FDMA SYMBOL AVAILABLE FOR
PDCH TRANSMISSION

[Figure 7]

RTD                    RTD

T(N)                   T(N+1)

TERMINAL:
DOWNLINK      SUBFRAME N-1    SUBFRAME N    SUBFRAME N+1
RECEPTION

SECURE TX/RX
SWITCHING TIME

DISCOVERY
SUBFRAME

TERMINAL:
UPLINK        SUBFRAME N-1    SUBFRAME N    S R S    SUBFRAME N+1
TRANSMISSION

BASE STATION:
UPLINK        SUBFRAME N-1    SUBFRAME N    SUBFRAME N+1
RECEPTION

FREQUENCY

TIME

[Figure 8]

[Figure 9]

[Figure 10]

EP 2 942 881 A1

[Figure 11]

N VARIABLE SYMBOLS

S(1), S(2) ⋯ S(N)

DFT

SUBCARRIER

FREQUENCY

IFFT

TIME

[Figure 12]

| DISCOVERYSUBFRAMECONFIGURATIONFDD | OFFSET VALUE ELEMENT OF $\Delta_{DSC}$ |
|---|---|
| {xxxxxx1} | 7 |
| {xxxxx1x} | 6 |
| {xxxxx1xx} | 5 |
| {xxxx1xxx} | 4 |
| {xxx1xxxx} | 3 |
| {xx1xxxxx} | 2 |
| {x1xxxxxx} | 1 |
| {1xxxxxxx} | 0 |

[Figure 13a]

SUBFRAME BELONGING TO DISCOVERY HOPPING PROCESS 0

[Figure 13b]

0 1 2 3 4 5 6 7 0 1 2 3 4 5 6 7 0 1 2 3 4 5 6 7

TIME

⬛ SUBFRAME BELONGING TO DISCOVERY HOPPING PROCESS 0

⬛ SUBFRAME BELONGING TO DISCOVERY HOPPING PROCESS 1

[Figure 14a]

[Figure 14b]

CELLULAR COMMUNICATION RESOURCES

DISCOVERY RESOURCES

CELLULAR COMMUNICATION RESOURCES

DISCOVERY RESOURCES

CELLULAR COMMUNICATION RESOURCES

UPLINK FREQUENCY BAND

FREQUENCY

TIME

DISCOVERY SUBFRAME

D-RBG

[Figure 15]

$K_{s1}$

FIRST SLOT

$K_{s2}$

SECOND SLOT

[Figure 16]

DISCOVERY SUBFRAME

FREQUENCY

TIME

☐ D-RBG

[Figure 17]

| | Q |
|---|---|
| M = 1 OR 2 | 1 |
| M = 3 OR 4 | 2 |
| 5 < = M < = 11 | 3 |
| M > 11 | 4 |

[Figure 18]

| | DATA SYMBOL | | DM RS SYMBOL |
| --- | --- | --- | --- |
| | FIRST SLOT | SECOND SLOT | |
| NORMAL CP | 0, 1, 2, 4, 5, 6 | 0, 1, 2, 4, 5 | 3 |
| EXTENDED CP | 0, 1, 3, 4, 5 | 0, 1, 3, 4 | 2 |

[Figure 19]

$$A\begin{bmatrix}1 & 2 & 3 & 4\\B & 2 & 1 & 4 & 3\\C & 3 & 4 & 1 & 2\\D & 4 & 3 & 2 & 1\end{bmatrix}$$

A $\begin{bmatrix}1 & 2 & 3 & 4\end{bmatrix}$
B $\begin{bmatrix}2 & 1 & 4 & 3\end{bmatrix}$
C $\begin{bmatrix}3 & 4 & 1 & 2\end{bmatrix}$
D $\begin{bmatrix}4 & 3 & 2 & 1\end{bmatrix}$

E $\begin{bmatrix}1 & 3 & 4 & 2\end{bmatrix}$
F $\begin{bmatrix}2 & 4 & 3 & 1\end{bmatrix}$
G $\begin{bmatrix}3 & 1 & 2 & 4\end{bmatrix}$
H $\begin{bmatrix}4 & 2 & 1 & 3\end{bmatrix}$

I $\begin{bmatrix}1 & 4 & 2 & 3\end{bmatrix}$
J $\begin{bmatrix}2 & 3 & 1 & 4\end{bmatrix}$
K $\begin{bmatrix}3 & 2 & 4 & 1\end{bmatrix}$
L $\begin{bmatrix}4 & 1 & 3 & 2\end{bmatrix}$

[Figure 20]

DISCOVERY CHANNEL TRANSMISSION PERIOD
$T_{DC}$
DISCOVERY FRAME 0
DISCOVERY FRAME 1
DISCOVERY FRAME $N_{t\_DC}-1$
$T_{DF}$
DISCOVERY HOPPING PROCESS PERIOD $T_{DC\_hop}$
TIME

[Figure 21]

|       | T(M)[0] | T(M)[1] | T(M)[2] | T(M)[3] |
|-------|---------|---------|---------|---------|
| T(0)  | 00      | 01      | 10      | 11      |
| T(1)  | 01      | 00      | 11      | 10      |
| T(2)  | 10      | 11      | 00      | 01      |
| T(3)  | 11      | 10      | 01      | 00      |

[Figure 22]

|       | T(M)[0] | T(M)[1] | T(M)[2] | T(M)[3] |
|-------|---------|---------|---------|---------|
| T(4)  | 00      | 10      | 11      | 01      |
| T(5)  | 01      | 11      | 10      | 00      |
| T(6)  | 10      | 00      | 01      | 11      |
| T(7)  | 11      | 01      | 00      | 10      |

[Figure 23]

|        | T(M)[0] | T(M)[1] | T(M)[2] | T(M)[3] |
|--------|---------|---------|---------|---------|
| T(8)   | 00      | 11      | 01      | 10      |
| T(9)   | 01      | 10      | 00      | 11      |
| T(10)  | 10      | 01      | 11      | 00      |
| T(11)  | 11      | 00      | 10      | 01      |

[Figure 24]

| Nf_symb(S) / K(M) | 6 (54) | 12 (108) | 24 (216) |
|---|---|---|---|
| 100 (150) | 2.81 | 1.39 | 0.69 |
| 150 (225) | 4.17 | 2.08 | 1.04 |
| 200 (300) | 5.56 | 2.78 | 1.39 |

[Figure 25]

| Nf_symb(S) / K(M) | 6 (66) | 12 (132) | 24 (264) |
|---|---|---|---|
| 100 (150) | 2.27 | 1.14 | 0.57 |
| 150 (225) | 3.41 | 1.70 | 0.85 |
| 200 (300) | 4.55 | 2.27 | 1.14 |

[Figure 26]

[Figure 27]

RANGE OF DISCOVERY CHANNEL TRANSMITTED
BY TERMINAL A

C

D

A

B

RANGE OF DISCOVERY CHANNEL TRANSMITTED
BY TERMINAL B

[Figure 28]

[Figure 29]

|  | BASE SEQUENCE INDEX | CYCLIC SHIFT INDEX | NOTE |
|---|---|---|---|
| CELL TP0 | 0 | 0, 6 | |
| CELL TP1 | 0 | 3, 9 | |
| CELL TP3 | 1 | 0 | |
| CELL TP4 | 2 | 0, 6 | |
| CELL TP8 | 2 | 3, 9 | |

[Figure 30]

EP 2 942 881 A1

[Figure 31]

## (N-1) NxN LATIN SQUARE MATRIXES

| Q=0 | Q=1 | ············· | Q=M-1 | ······ | Q=N | ······ | Q=N-2 |

USED IN TX HOPPING PATTERN    USED IN NO TX HOPPING
PATTERN

[Figure 32]

## NxN LATIN SQUARE MATRIX

NO TX HOPPING
PATTERN OF CELL A

NO TX HOPPING
PATTERN OF CELL B

NO TX HOPPING
PATTERN OF CELL C

[Figure 33]

NxN LATIN SQUARE MATRIX

CELL A

CELL B

CELL C

[Figure 34]

TIME POINT OF CELL A AT WHICH
TRANSMISSION CAN START

T_A_S0

T_A_S1

CELL A

SCAN AREA

TIME POINT OF CELL B AT WHICH
TRANSMISSION CAN START

T_B_S0

T_B_S1

CELL B

SCAN AREA

TIME POINT OF CELL C AT WHICH
TRANSMISSION CAN START

T_C_S0

T_C_S1

CELL C

SCAN AREA

## INTERNATIONAL SEARCH REPORT

| | International application No. |
|---|---|
| | **PCT/KR2013/006178** |

**A. CLASSIFICATION OF SUBJECT MATTER**

*H04B 7/24(2006.01)i*

According to International Patent Classification (IPC) or to both national classification and IPC

**B. FIELDS SEARCHED**

Minimum documentation searched (classification system followed by classification symbols)
H04B 7/24; H04L 29/02; H04B 1/713; H04W 72/12; H04B 7/10; H04W 84/18; H04W 72/04; H04W 84/12

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: direct communication, discovery, sub-frame, channel, P2P, set-up region, hopping, CP (cyclic prefix), latin square matrix, uplink, downlink, broadcasting

**C. DOCUMENTS CONSIDERED TO BE RELEVANT**

| Category* | Citation of document, with indication, where appropriate, of the relevant passages | Relevant to claim No. |
|---|---|---|
| A | WO 2011-121374 A1 (NOKIA CORPORATION) 06 October 2011<br>See page 2, lines 1-5; page 4, lines 4-6; claim 14; and figure 3. | 1-20 |
| A | US 2010-0202400 A1 (THOMAS, Richardson et al.) 12 August 2010<br>See paragraphs 24, 25 and 31; and figure 2. | 1-20 |
| A | KR 10-2010-0033929 A (ELECTRONICS AND TELECOMMUNICATIONS RESEARCH INSTITUTE) 31 March 2010<br>See paragraphs 41, 42 and 47; and figure 5. | 1-20 |
| A | KR 10-2011-0083719 A (QUALCOMM INCORPORATED) 20 July 2011<br>See paragraphs 6, 7 and 40; and figure 3. | 1-20 |
| A | KR 10-2012-0074254 A (ELECTRONICS AND TELECOMMUNICATIONS RESEARCH INSTITUTE) 05 July 2012<br>See paragraphs 15, 24 and 86; and figure 5. | 1-20 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 OCTOBER 2013 (24.10.2013) | **25 OCTOBER 2013 (25.10.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

**EP 2 942 881 A1**

INTERNATIONAL SEARCH REPORT
Information on patent family members

International application No.

**PCT/KR2013/006178**

| Patent document cited in search report | Publication date | Patent family member | Publication date |
|---|---|---|---|
| WO 2011-121374 A1 | 06/10/2011 | EP 2554013 A1<br>US 2013-0170470 A1 | 06/02/2013<br>04/07/2013 |
| US 2010-0202400 A1 | 12/08/2010 | CN 102318421 A<br>EP 2397010 A1<br>JP 2012-517784 A<br>TW 201101906 A<br>WO 2010-093874 A1 | 11/01/2012<br>21/12/2011<br>02/08/2012<br>01/01/2011<br>19/08/2010 |
| KR 10-2010-0033929 A | 31/03/2010 | US 2011-0170573 A1<br>WO 2010-033000 A2 | 14/07/2011<br>25/03/2010 |
| KR 10-2011-0083719 A | 20/07/2011 | CN 102204293 A<br>EP 2364570 A1<br>EP 2364570 B1<br>JP 2012-507974 A<br>TW 201032496 A<br>US 2010-0110929 A1<br>US 8121097 B2<br>WO 2010-053686 A1 | 28/09/2011<br>14/09/2011<br>13/02/2013<br>29/03/2012<br>01/09/2010<br>06/05/2010<br>21/02/2012<br>14/05/2010 |
| KR 10-2012-0074254 A | 05/07/2012 | WO 2012-091420 A2<br>WO 2012-091420 A3 | 05/07/2012<br>04/10/2012 |

Form PCT/ISA/210 (patent family annex) (July 2009)

58